# EUROPEAN PATENT APPLICATION

(11) **EP 1 496 458 A1**
(43) Date of publication of application: **12.01.2005**
(21) Application number: 03710361.1
(22) Date of filing: 14.03.2003
(51) Int. Cl.: G06F 17/60

(54) **RECYCLE GUARANTEE METHOD AND SERVER**

(30) Priority: 18.03.2002 JP 2002073885; 24.10.2002 JP 2002309237
(71) Applicant: Kabushiki Kaisha Yamagen, Tokyo 136-0082 (JP)
(72) Inventor: YAMAMOTO, Taku, c/o Kabushiki Kaisha Yamagen, Tokyo 136-0082 (JP)
(74) Representative: Foster, Mark Charles
(86) International application number: PCT/JP2003/003080
(87) International publication number: WO 2003/079253

(57) **Abstract**

The present invention is intended to provide a recycle guarantee method, a server applicable to the method, a recycle guarantee program, a computer-readable recording medium for the recycle guarantee program, a method of selling recycle-guaranteed products, recycle-guaranteed products, and recycle guarantee account. The recycle guarantee method is carried out by a server which receives recycling conditions of materials composing a product, stores the received recycle guarantee conditions together with a recycle guarantee information identifier, stores a guarantee code of the product in correlation to the recycle guarantee information identifier, searches the recycle guarantee conditions in response to the guarantee code, and outputs the recycle guarantee conditions. The invention is effective in enabling consumers to select and utilize products at their wills and to actively participate in the recycling.

## Description

### FIELD OF THE INVENTION

This invention relates to recycling of products collected as wastes, and especially relates to recycling of materials composing products.

### BACKGROUND OF THE INVENTION

Recently, it is strongly requested to promote a recycling-oriented society in order to cope with environmental restrictions on sanitary landfill systems, and to promote effective utilization of limited energy resources. Particularly, recycling of products, i.e. recycling of materials constituting discarded products, is necessary to construct the recycling-oriented society as well as to reduce and reuse disused products.

A number of proposals for recycling products have been offered up to now in the following publications: Japanese Patent Laid-Open Publications No. Hei 10-222,554 and No. Hei 09-160,959 describe the methods of making recyclable articles; Japanese Patent Laid-Open Publications No. 2002-032,530 and No. 2000-048,066 describe the methods of determining whether or not products are recyclable; and Japanese Patent Lid-Open Publications No. Hei 06-211,301 and No. Hei 06-168,253 describe the methods of promoting reuse of resources retrieved from disused products.

All of persons related to life cycles of products are expected to positively take part in the recycling of materials constituting the products. For instance, products are manufactured, used by consumers, discarded as wastes, collected, and recycled. Even if a product maker designs, manufactures and sells products considering recycling of materials, but if a consumer uses it in a manner which is not desirable for recycling, such a product would be difficult to be reused when it is discarded as a waste.

It is assumed here that a furniture maker designs and makes furniture in order that its wooden materials are recyclable. If a consumer uses the furniture applying non-recyclable adhesives thereon and discards the furniture as a waste, a recycling cost of the furniture will be much more than a recycling cost estimated by the furniture maker.

The consumer has the right of selecting the product and discarding it his or her wills. Therefore, it is necessary to let the consumer recognize that the product has been designed and made to be recyclable, which is effective in enabling the consumer to make positive efforts in the recycling. Further, it is necessary to inform the consumer how to use the purchased product in a manner to promote the recycling.

In recycle systems of the related art, the foregoing objects have been accomplished through improvements of product recycling techniques or by product makers who should collect used products, or persons or parties which are partially concerned with life cycles of the products. Further, it has been very difficult to let consumers actively take part in the recycling.

With existing recycling mechanisms, it is impossible to anticipate that discarded products are in a recyclable state. The more products are discarded in a non-recyclable state, the more recycling cost is required. In such a case, it will be very difficult to secure parties or spaces for receiving wastes, which would make the product maker give up recycling of wastes. The wastes would be finally burnt or buried.

Therefore, existing recycle mechanisms would prevent full re-use of wastes or repeated recycling of materials constituting wastes.

The present invention has been contemplated in order to overcome problems of the related art, and is intended to provide a recycle guarantee method, a server applicable to the method, a recycle guarantee program, a computer-readable recording medium for the recycle guarantee program, a method of selling recycle-guaranteed products, recycle-guaranteed products, and recycle guarantee account. The invention is effective in enabling consumers to select and utilize products at their wills and to actively participate in the recycling.

### SUMMARY OF THE INVENTION

There is provided a product recycling guarantee method carried out by a server, the server performs the following: receiving material recycling conditions for a material constituting a product storing the received material recycling conditions together with a guarantee code of the material and a guarantee code of a product made of the material; receiving the guarantee code of the material from a product maker's terminal, extracting the stored recycling conditions on the basis of the received guarantee code, and transmitting the extracted material recycling conditions to the product maker's terminal; and receiving the guarantee code of the product from a consumer's terminal, extracting the material recycling conditions on the basis of the received guarantee code, and transmitting the extracted material recycling conditions to the consumer's terminal.

The foregoing feature enables the product maker to design and make a product taking recycling of materials into consideration. Further, this enables the consumer to use a purchased product in a state suitable to recycling. Therefore, the product manufactured in accordance with the recycle guarantee conditions can be easily recycled when discarded as a waste. Since a discount rate of a collecting fee depends upon a level by which material recycle conditions are satisfied, the consumer who pays the collecting fee will use the purchased product so as to meet the recycle guarantee conditions. Further, product maker can actively observe the recycle guarantee conditions. As a result, recycle of the material is further promoted.

### BRIEF DESCRIPTION OF THE DRAWINGS

Fig. 1 is a block diagram of a recycle guarantee server according to a first embodiment of the invention.
Fig. 2 is a flow chart showing how a recycle guarantee method is carried out in the first embodiment.
Fig. 3 shows an example of a Web screen for receiving recycle guarantee information.
Fig. 4 shows an example of a Web screen for outputting a guarantee code.
Fig. 5 shows further examples of Web screens for receiving recycle guarantee information.
Fig. 6 shows an example of a medium for recording the recycle guarantee information.
Fig. 7 shows examples of Web screens for receiving material processing information.
Fig. 8 shows another medium for recording the recycle guarantee information.
Fig. 9 shows examples of Web screens for receiving service information.
Fig. 10 shows an example of a Web screen for outputting a collecting condition.
Fig. 11 is a flow chart showing a recycle guarantee method in a second embodiment.
Fig. 12 shows examples of recycle guarantee information recording medium.
Fig. 13 is a flow chart of the recycle guarantee method in a third embodiment.
Fig. 14 shows examples of recycle guarantee information recording medium.
Fig. 15 is a flow chart of the recycle guarantee method of a fourth embodiment.
Fig. 16 is a flow chart of a recycle guarantee method in a fifth embodiment.
Fig. 17 shows a further example of a Web screen for receiving recycle guarantee information.
Fig. 18 shows an example of a recycle guarantee certificate.
Fig. 19 shows an example of a Web screen for receiving recycle guarantee information.
Fig. 20 shows a further example of a recycle guarantee certificate.
Fig. 21 shows a still further example of a recycle guarantee certificate.
Fig. 22 shows a flow chart of a recycle guarantee method in a seventh embodiment.
Fig. 23 shows an example of a Web screen for receiving a guarantee information identifier of a material.
Fig. 24 shows an example of a Web screen on which recycle guarantee information is displayed in response to the guarantee information identifier.
Fig. 25 shows examples of Web screens for receiving material processing information.
Fig. 26 shows examples of data stored in the server.
Fig. 27 schematically shows the configuration of a recycle guarantee system.

### BEST MODES FOR EMBODYING THE INVENTION

Referring to the drawings, the invention will be described hereinafter with reference to a recycle guarantee method, a server applicable to the method, a recycle guaranteeing program, a computer-readable recording medium, a recycle guarantee program recording medium, a method of selling a recycle-guaranteed product, a recycle-guaranteed product, and a recycle guarantee account.

A piece of furniture (called the "furniture") made of a wooden material is exemplified in the following description. The wooden material refers to woods, cut boards, fiber boards, plywood boards, and so on.

The furniture discarded as a waste is recycled to regenerate raw material chips. For example, fiberboards or particle boards will be sometimes regenerated from wooden furniture, or particle boards will be regenerated from furniture composed of particle boards.

The term "recycle guarantee" represents that discarded furniture (called the "furniture waste") will be collected according to conditions established when wooden materials are sold to a product maker. In other words, the wooden materials are sold on the conditions that they should be easily regenerated from the furniture waste. The conditions are referred to as the "recycle guarantee conditions". The furniture waste will be collected according to the recycle guarantee conditions.

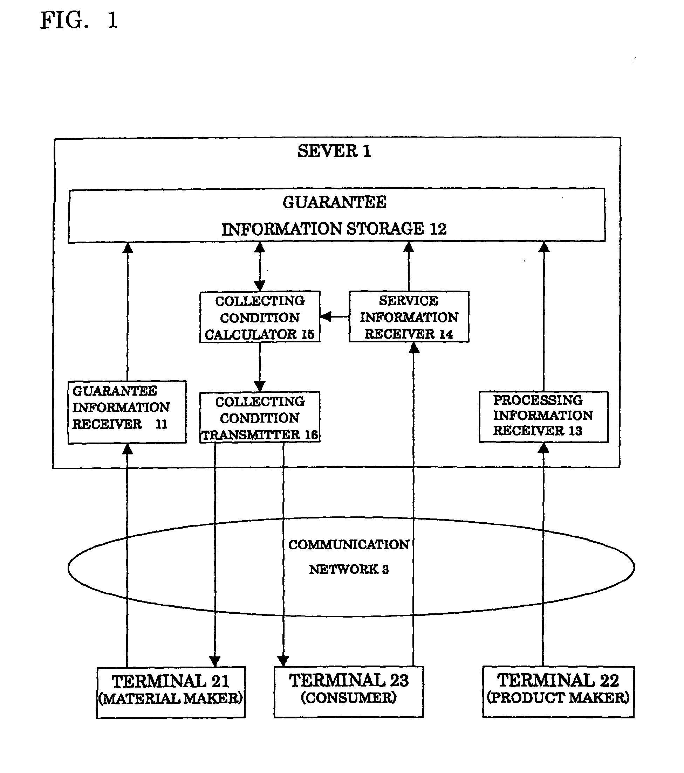

Referring to Fig. 1, a recycle guarantee server 1 (called the "server 1") is connected to terminals 21, 22 and 23 via a communication network 3. The terminals 21, 22 and 23 are respectively used by a material maker A, a product maker B, and a consumer C.

The material maker A produces and sales wooden materials, collects the furniture waste, and regenerates wooden materials therefrom.

The product maker B purchases the wooden materials from the material maker A, processes them to make furniture, and sells it to the consumer C.

The consumer C buys the furniture made by the product maker B, and may discard it as a waste in the future.

The communication network 3 may be a computer communication network such as an Internet or LAN. The server 1 and terminals 21, 22 and 23 are connected to the communication network 3 via dedicated lines, a public switched telephone network (PSTN), a wireless telephone network, a CATV network, a satellite communication network or the like, not shown.

The terminals 21 to 23 may be any kinds of data processing units which can communicate with the server 1 via the communication network 3, e.g. personal computers, personal digital assistants (PDA) with data communication functions, or cell phones.

The server 1 may be a data processing unit which is communicative with the terminals 21 to 23 via the communication network 3, and comprises a guarantee information receiver 11, a guarantee information storage 12, a processing information receiver 13, a service information receiver 14, a collecting condition calculator 15, and a collecting condition transmitter 16.

In response to the recycle guarantee program (called the "program"), the server 1 controls the foregoing devices in order to achieve the recycle guarantee method.

When a computer-readable recording medium (called the "recording medium") containing the foregoing program is used, a computer (not shown) may function as the server 1, and carry out the recycle guarantee method.

Further, the server 1 functions as a Web server in order to transmit and receive information to and from the terminals 21 to 23. Alternatively, the server 1 may communicate with the terminals 21 to 23 by other means.

The server 1 may be managed and operated by either or both of the material maker A and the product maker B, or by a third party.

The guarantee information receiver 11 receives recycle guarantee information, which includes recycle guarantee conditions of wooden materials constituting furniture, a criterion for determining a satisfaction level of the furniture with respect to the recycle guarantee conditions, and guarantee contents depending upon the satisfaction level of the furniture on the basis of the foregoing criterion.

The recycle guarantee condition of wooden materials represents conditions for making furniture using wooden materials, and service conditions of the furniture.

The satisfaction level of the furniture represents a level by which the furniture satisfies the recycle guarantee conditions for the wooden materials. The satisfaction level is determined on the basis of not only the level by which the material processing conditions are satisfied by the product maker but also on the service conditions of the furniture observed by the consumer C. The satisfaction level of the furniture represents the level at which the recycle guarantee conditions are observed.

The guarantee contents, i.e. a collecting condition, are defined as a discount rate for a waste collection fee. The collection fee is paid by the consumer C when the material maker A collects the furniture waste. The collection fee does not include a shipping cost between the consumer C and the material maker A.

The guarantee information storage 12 stores the recycle guarantee information together with a guarantee code to be described later. The server 1 searches and extracts the recycle guarantee information on the basis of the guarantee codes.

The processing information receiver 13 and the service information receiver 14 receive information for determining the satisfaction level of the furniture, i.e. processing information and service information. The processing information is used to determine the satisfaction level of the furniture with respect to the material processing conditions. The service information is used to determine the satisfaction level of the furniture with respect to the service conditions.

The collecting condition calculator 15 determines the satisfaction level of the furniture on the basis of the guarantee conditions for the wooden material, and calculates a discount rate of the collection fee.

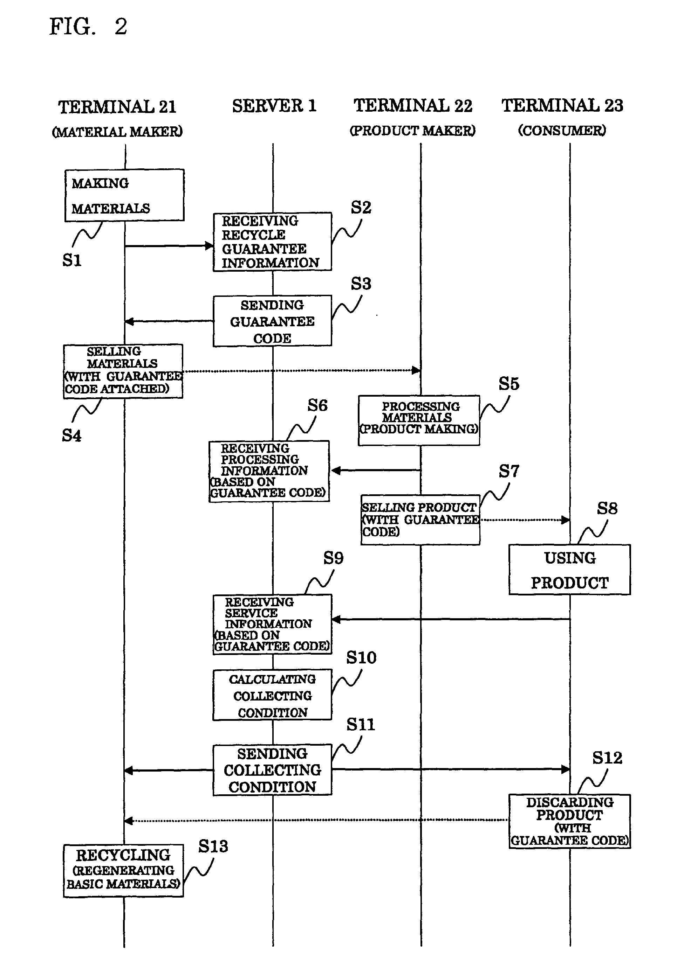

The collecting condition transmitter 16 notifies the calculated discount rate (to be described later) by sending a Web screen, sending an email via the communication network 3, or printing a sheet using a printer (not shown). Alternatively, the discount rate may be shown on a display of the server 1. The recycle guarantee method is carried out as shown in a flow chart of Fig. 2, and Fig. 3 to Fig. 10. In Fig. 2, the solid lines with arrows denote flows of the information while dotted lines denote flows of wooden materials and furniture.

After making the wooden material (step S1), the material maker A inputs recycle guarantee information of the wooden material in the server 1. In step S2, the server 1 receives the recycle guarantee information from the terminal 21 via the guarantee information receiver 11, and stores the received information in the guarantee information storage 12. Then, the server 1 provides the terminal 21 with a guarantee code for the received recycle guarantee information (step S3). The guarantee code is used to identify the material guarantee condition, criteria, and a collecting condition. As described above, the server 1 stores the recycle guarantee information together with the guarantee code in the guarantee information storage 12.

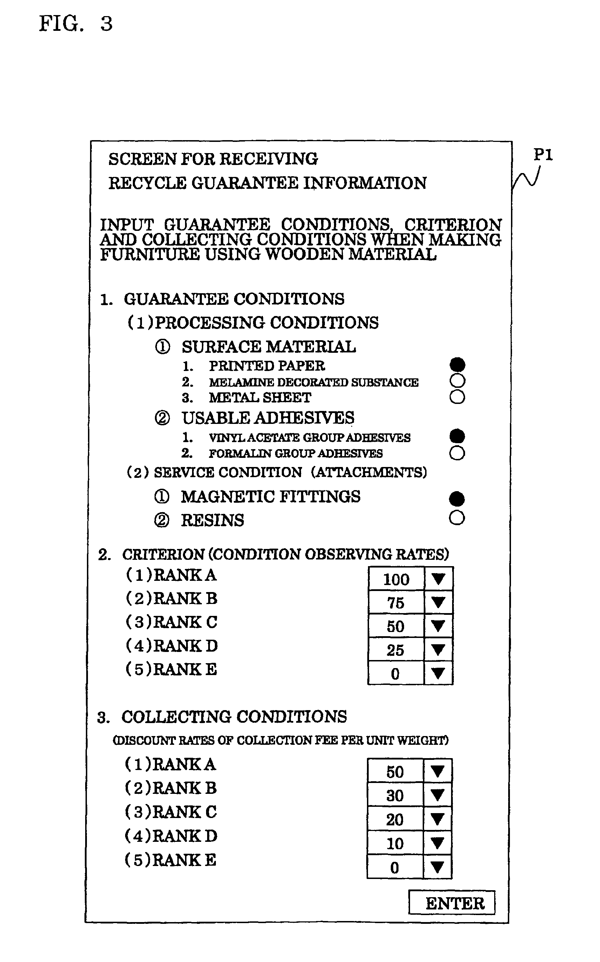

Fig. 3 shows an example of a Web screen for the server 1 to receive the recycle guarantee information. The material maker A gains access to the server 1 via the terminal 21, receives a Web screen P1, selects guarantee conditions and so on out of items shown on the Web screen P1, and sends selected items to the server 1.

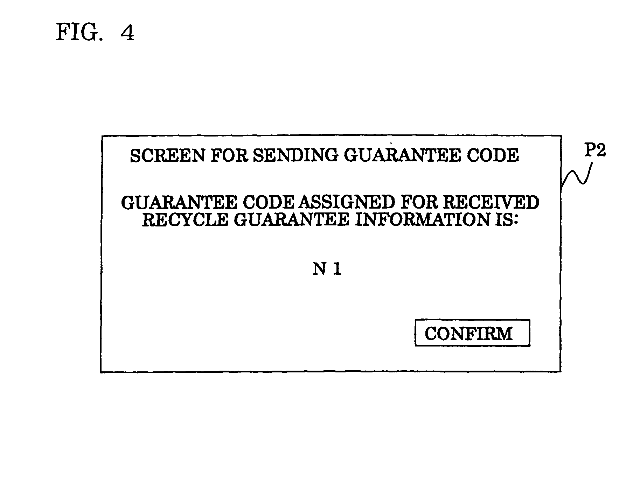

The server 1 outputs the guarantee code to the terminal 21 as shown in an example of the Web screen P2 in Fig. 4. Receiving the Web screen P2, the material maker A confirms that the guarantee code N1 is assigned to the registered recycle guarantee information.

The guarantee code N1 is issued by the server 1. Alternatively, the material maker A may input a guarantee code when transmitting the recycle guarantee information.

Further the recycle guarantee information may be independently prepared by the maker A, or may be prepared by both of the material maker A and the product maker B when the wooden material is sold to the product maker B. In this case, the material maker A may consult the product maker B with respect to how to process the wooden materials. Material processing conditions agreed by the material maker A and the product maker B are then transmitted to the server 1. Thereafter, the material maker A may sell the wooden material.

Referring to Fig. 3, printed paper is selected as a surface material. The material maker A registers a processing condition that the printing paper is suitable to regeneration of the wooden materials while melamine-decorated materials and metal sheets are not preferable. Further, the material maker A similarly registers polyvinyl acetate group adhesives as usable adhesives. Further, magnetic fittings are registered to be acceptable in the furniture.

As the criterion, rank A is assigned when the recycle guarantee conditions are observed by 100%; rank B is for 75% to less than 100%; rank C is for 50% to less than 75%; rank D is for 25% to less than 50%; and rank E is for less than 25%.

The discount rate of the collection fee per unit weight is 50% for the rank A; 30% for the rank B; 20% for the rank C; 10% for the rank D; and 0% for the rank E.

Further, the material maker A may select any alternatives of the material recycle guarantee information stored by the server 1. Alternatively, the server 1 may receive recycle guarantee information prepared by the maker A in its own right.

The material maker A may send the recycle guarantee information either after or before making wooden material.

The recycle guarantee information may be inputted not only by the material maker A and a collector of the wooden material but also by parties who import wooden materials from abroad and sell them.

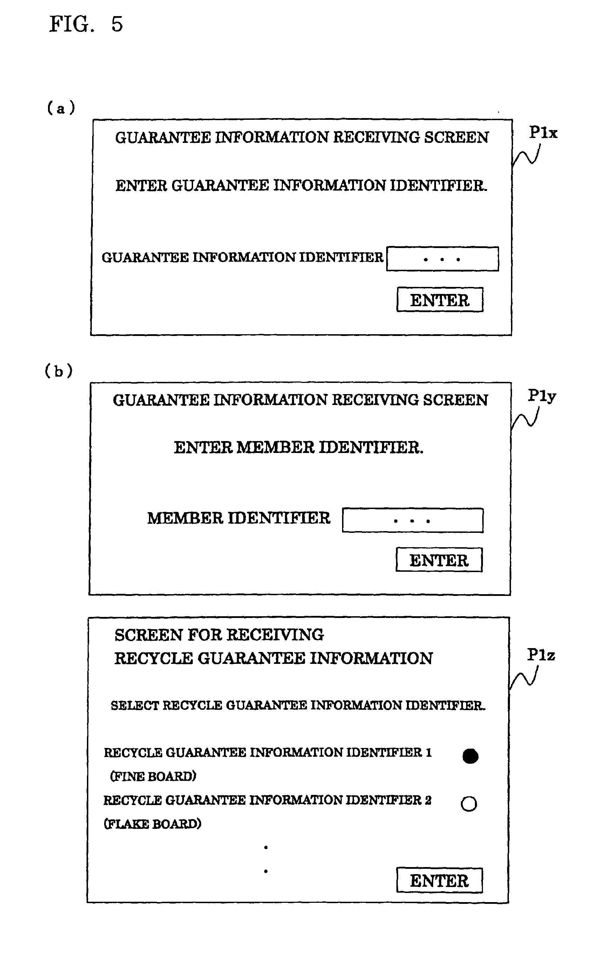

Web screens shown in Fig. 5(a) and Fig. 5(b) may be used by the material maker A in order to input the recycle guarantee information, which alleviates burden on the material maker A.

Specifically, Fig. 5(a) shows a Web screen P1x for receiving an identifier which is used to identify existing recycle guarantee information, and Fig. 5(b) shows a Web screen P1y for receiving an identifier which is used to identify an existing member, and a Web screen P1z for receiving an identifier of the recycle guarantee information registered by the existing member.

Using the Web screen P1x, the material maker A can obtain a guarantee code by sending the guarantee information identifier to the server 1 so long as the recycle guarantee information is the same as the existing recycle guarantee information.

When there exist a plurality of pieces of recycle guarantee information, the material maker A sends its own identifier to the server 1 on the Web screen P1y, and receives the Web screen P1z listing the guarantee information identifiers. The material maker A selects its own guarantee information identifier, returns it to the server 1, and obtains a guarantee code.

Further, the guarantee information identifier or member identifier may be provided by the server 1 or may be prepared by the material maker A.

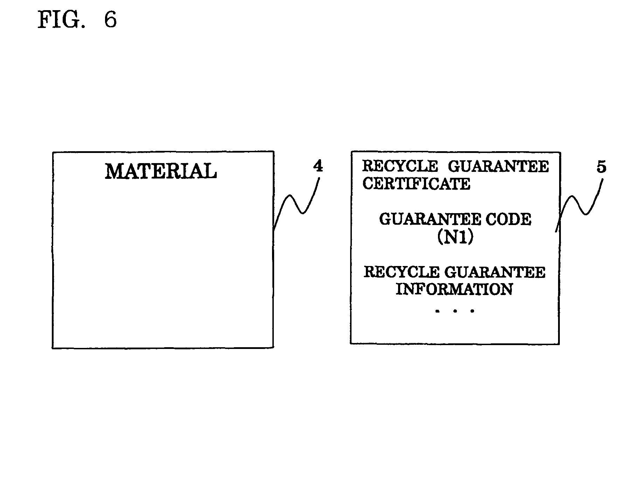

Referring to Fig. 2, the material maker A assigns the guarantee code, corresponding to the registered recycle guarantee information, to the wooden material, and sells the material to the maker B (step 4). For instance, a recycle guarantee certificate 5 indicating the guarantee code N1 is attached on the wooden material 4 as shown in Fig. 6. The recycle guarantee certificate 5 may be prepared by the material maker A or by the server 1. In the latter case, the server 1 outputs the guarantee code to the material maker A (step S3). Thereafter, the material maker A prints the recycle guarantee certificate 5 on a paper sheet, for example.

As long as the guarantee code N1 can be identified when the product is collected as a waste, the recycle certificate 5 may be omitted. In this case, the guarantee code N1 may be directly indicated on the wooden material.

Further, the recycle certificate 5 may mention all or a part of the recycle guarantee information as well as the guarantee code if it is possible to recognize the recycle guarantee information on the basis of the guarantee code.

It is still possible for the recycle certificate 5 to list a URL of the Web screen for retrieving the recycle guarantee information in the server 1.

The recycle certificate recording medium may be a computer-readable record in stead of the paper sheet.

The product maker B can confirm the recycle guarantee information of the wooden material 4 on the basis of the guarantee code N1. Specifically, the product maker B gains access to the server 1 via its terminal 22 in order to send the guarantee code N1. In response to the guarantee code N1, the server 1 retrieves the recycle guarantee information stored in the guarantee information storage 12 using a unit not shown, and returns the retrieved recycle guarantee information to the terminal 22.

The product maker B can confirm the processing conditions for the wooden material 4, and designs and makes furniture taking future recycling of the wooden material 4 into consideration.

The server 1 may return to the terminal 22 a part of the recycle guarantee information corresponding to the guarantee code N1, e.g. only the processing conditions.

The product maker B can confirm the recycle guarantee information after or before purchasing the wooden material. In other words, the product maker B can decide the purchase of the wooden material 4 after confirming the recycle guarantee conditions and a collecting condition.

Thereafter, the product maker B makes furniture using the wooden material 4 (step S5), and registers the processing conditions in the server 1. The server 1 receives the processing information from the terminal 22 via the processing information receiver 13, and stores the information in the guarantee information receiver 12 (step S6). The server 1 searches the guarantee information storage 12, thereby extracting the processing conditions and information corresponding to the guarantee code N1.

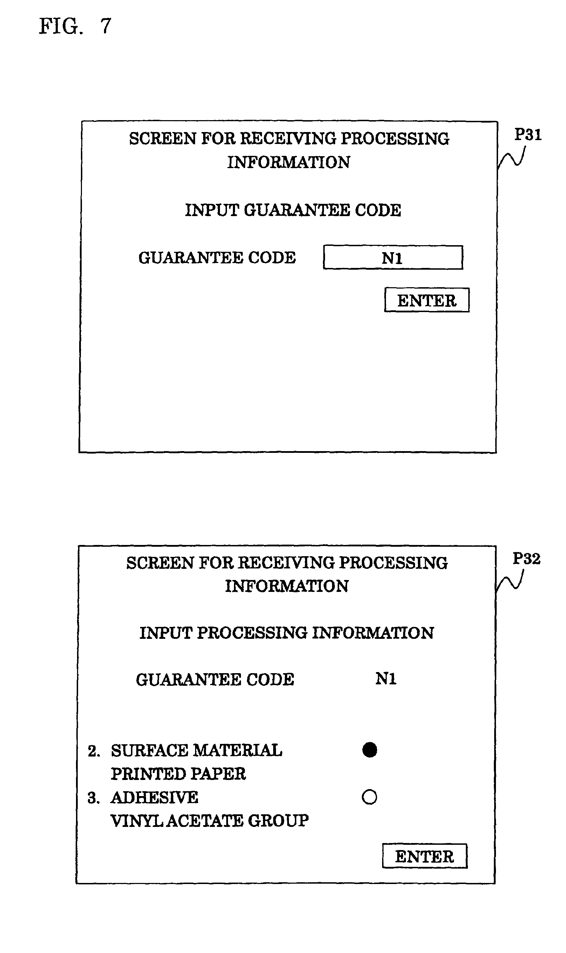

Fig. 7 shows examples of Web screens P31 and P32 for the server 1 to receive the processing information. Gaining access to the server 1 via the terminal 22, the product maker B receives the Web screen P31, onto which the guarantee code N1 for the wooden material 4 is entered. The guarantee code N1 is transmitted to the server 1. The server 1 searches the guarantee information storage 12, extracts the processing conditions of the wooden material 4 having the guarantee code N1, prepares the Web screen P32, and sends it to the terminal 22. The product maker B enters the applied processing conditions on the Web screen P32 and sends them to the server 1, i.e. the processing conditions for the surface-treated material is satisfied (only the printed paper has been used) while the processing conditions for adhesives are not satisfied (an adhesive other than a polyvinyl acetate adhesive has been used).

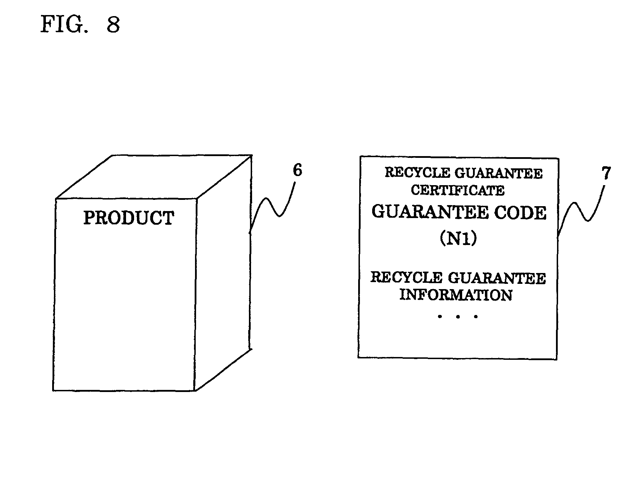

Now reference is made to Fig. 2. In step S7, the product maker B sells the furniture 6 to the consumer C. The furniture 6 carries the recycle certificate 7 describing the guarantee code N1, as shown in Fig. 8. Alternatively, the recycle guarantee certificate 7 may be a copy of the recycle guarantee certificate 5 attached on the wooden material 4, or the server 1 may issue a recycle guarantee certificate when it receives the processing conditions in step S6.

A tag carrying the guarantee code N1 thereon may be attached to the furniture 6.

Further, the recycle guarantee certificate 7 may list all or a part of the recycle guarantee information as well as the guarantee code.

Still further, the recycle guarantee certificate 7 may list the URL of the Web screen (not shown) for retrieving the recycle guarantee information.

The consumer C can confirm the recycle guarantee information of the wooden material 4 of the furniture, on the basis of the guarantee code N1. Specifically, referring to the URL on the recycle guarantee certificate 7, the consumer C gains access to the server 1 via the terminal 23, and sends the guarantee code N1 to the server 1. Receiving the guarantee code N1, the server 1 searches the recycle guarantee information in the guarantee information storage 12, and returns the retrieved information to the terminal 23.

In accordance with the received information, the consumer C can use the furniture 6 in such a manner that the wooden material 4 of the furniture 6 is recyclable.

The server 1 may return to the terminal 23 a part of the recycle guarantee information for the guarantee code N1, e.g. the service condition.

Alternatively, before buying the furniture 6, the consumer C may confirm the recycle guarantee information of the wooden material 4 of the furniture 6 on the basis of the guarantee code N1, in a furniture shop. In such a case, the consumer C can buy the furniture 6 after confirming the recycle guarantee conditions and the collecting condition of the wooden material 4 of the furniture 6. Further, the server 1 may be designed such that the consumer C can check how the wooden material 4 is processed in accordance with the processing conditions, or how a collection fee depends upon a service condition of the furniture 6.

Referring to Fig. 2, the consumer C registers in the server 1 the service information of the furniture 6 via the terminal 23 when he or she is going to discard the furniture 6 as a waste (step S8). The server 1 stores the received service information in the guarantee information storage 12 in relation to the service conditions (step S9), i.e. the server 1 can retrieve the service conditions and service information on the basis of the guarantee code N1.

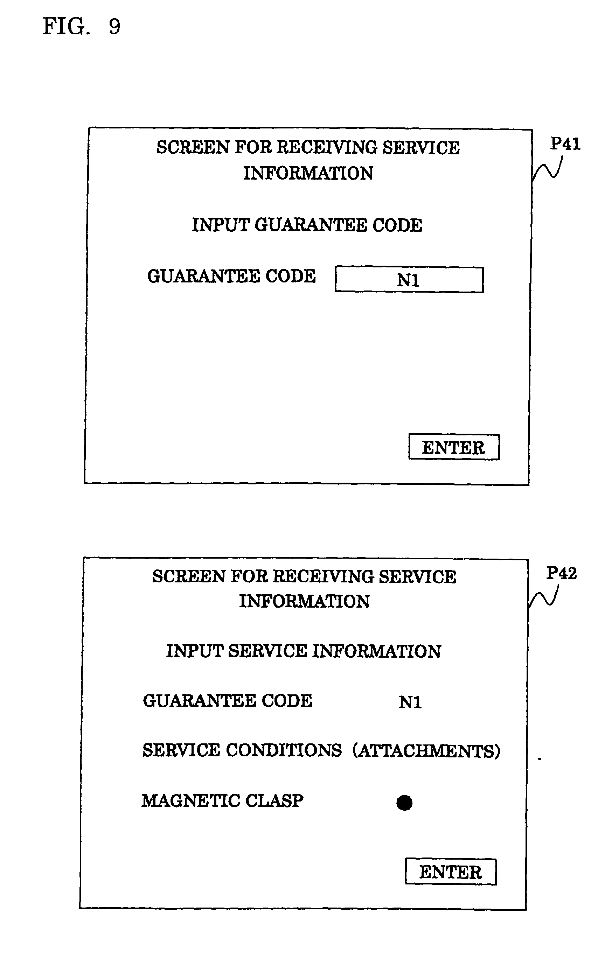

Fig. 9 shows an example of the Web screen for the server 1 to receive the service information. The consumer C enters the guarantee code N1, and sends it to the server 1. The server 1 searches the guarantee information storage 12, retrieves the service conditions related to the guarantee code N1, prepares a Web screen P42, and sends it to the terminal 23. The consumer C selects the service conditions which he or she has observed, and returns them to the server 1. In this case, only magnetic fittings have been applied to the furniture, which means that a requirement for the attachment has been observed.

In the foregoing case, one person sends the service information to the server 1, and another person may actually use the furniture 6. For instance, if the furniture is on the lease contract, a leasing company provides the server 1 with the service conditions, i.e. the leasing company has purchased the furniture 6 from the product maker B, and the furniture 6 is leased to a leaseholder.

Further, one person may send the service information to the server 1 while another person may use the furniture 6. For instance, if a buyer makes over the furniture 6 to another party, this party should provide the server 1 with the service information.

Still further, on the basis of the guarantee code N1, any person may confirm the recycle guarantee conditions or collecting condition of the wooden material of the furniture 6, or may ask how the recycle guarantee conditions have been observed. It is assumed here that the furniture 6 is bought and used by different persons, and another person sends the service information to the server 1.

Let's return to Fig. 2. Receiving the service information, the server 1 determines a satisfaction level of the furniture 6 with respect to the recycle guarantee conditions, and computes a collecting condition, using the collecting condition calculator 15 (step S10). In the example shown in Figs. 3, 7 and 9, two processing conditions are satisfied, i.e. surface-treated paper and attachment are satisfied out of three guarantee conditions (e.g. surface-treated paper, adhesive, and attachment). The server 1 determines the rank C (2÷3 0.67), and computes a discount rate for the collection fee per unit weight to be 20%.

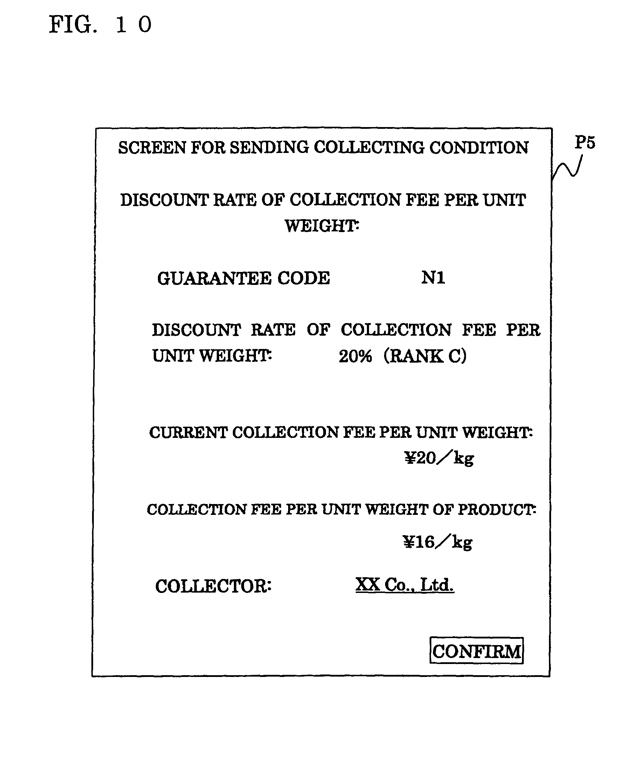

The server 1 outputs the computed collecting condition via the collecting condition transmitter 16 (step S11). The consumer C confirms the collecting condition, i.e. discount rate for the collection fee, on a Web screen P5 shown in Fig. 10. The Web screen P5 is returned to the consumer C in response to the information on the Web screen P42 of Fig. 9.

Simultaneously, the server 1 provides the material maker A with the collecting condition. In this case, the material maker A enters its own mail address when registering the recycle guarantee information. Then, the server 1 sends an e-mail describing the URL of the Web screen P5 to the registered mail address.

The Web screen P5 also describes not only the collection fee discount rate but also a going rate of a collection fee, a collection fee for the furniture 6 ((e.g. weight of the furniture 6) × (the going rate of the collection fee) × (1 discount rate)) and information concerning the collector (i.e. the material maker A in this case) such as the URL of the Web screen thereof. Transmitting the service information to the server 1, the consumer C will be informed of the collection fee and information on the collector who can collect furniture wastes.

The material maker A may register in the server 1 the information necessary for preparing the Web screen P5 (e.g. the collection fee per unit weight, collector and so on) when the recycle guarantee information is registered or updated. Alternatively, the server 1 may gain access to another server storing the recycle guarantee information, thereby obtaining the necessary information.

The server 1 may receive the service information from the consumer C not only when the furniture is discarded as a waste but also when the consumer C wishes to know fluctuations of the collection fee depending upon service states before or after the purchase of the furniture 6. In such a case, the server 1 may compute the collection fee on the basis of a going rate of the collection fee in response to the service information, or may compute the collection fee as a probable price.

Reference is made back to Fig. 2. The consumer C discards the furniture 6 (step S12). The recycle guarantee certificate 7 or a copy thereof may be attached on the furniture 6.

The material maker A collects the furniture 6 on the basis of the guarantee code and at the collection fee which has been computed on the basis of the discount rate per unit weight (step S11), recycles the furniture 6 and regenerates a wooden material (step S13). Recycle guarantee information will be registered for the regenerated wooden material, and a new guarantee code will be assigned to the wooden material. Then, the wooden material will be marketed.

The discount of the collection fee { (weight of the furniture 6) × (the going rate of the collection fee) × (discount rate per unit weight)} may be allotted as a deposit. In other words, the furniture 6 may be sold with some money (depending upon the weight of the furniture 6) deposited in a recycle guarantee account in relation to the guarantee code, and will be credited to the discount of the collection fee when the furniture 6 is collected for recycling in the future. The recycle guarantee account is used to cover the collection fee for the furniture waste. The server 1 also stores the information concerning the recycle guarantee account, which will be retrieved on the basis of the guarantee code of the furniture 6.

The party concerned with the recycle guarantee can alleviate future financial problems related to the collection fee through management of the recycle guarantee account on the basis of the guarantee code. Further, it is possible for the server 1 to notify the consumer that the collection fee of the furniture has been deposited. This is effective in letting the consumer feel easy about the recycle guarantee.

A person opening the recycle guarantee account, i.e. a holder of the account, may be a material maker, a product maker, or a third party such as an industry group, the Government, a local government, a non-profit organization, and so on.

The recycle guarantee account may be deposited by either the material maker or the product maker, or by both of them.

The server 1 may include a unit computing an amount to be deposited in the recycle guarantee account. For instance, the server 1 receives weight data of the material as a part of the processing information and computes the deposit amount on the basis of the weight. Otherwise, a ratio of the amount to be absorbed by the material maker or product maker on the basis of the observance level of the processing conditions of the product.

Further, the server 1 may store the account number in relation to the guarantee code, so that the account number can be identified on the basis of the guarantee code of the product when the product is discarded as a waste. Once the account number is identified, the server 1 can withdraw the amount to be contributed from the identified deposit account.

In the foregoing embodiment, the material maker A has set the processing and service conditions appropriate to the wooden material 4, and sells the wooden material 4 to the product maker B with the recycle guarantee. The product maker B can design and make the furniture 6 taking the recycling of the wooden material into consideration. Further, the consumer C can use the furniture 6 such that it is recyclable.

Therefore, the furniture 6 made and used in accordance with the processing and service conditions will be discarded in a recyclable state, which enables the regeneration of the wooden material 4. The collection fee of the used furniture 6 will be discounted in accordance with the observed processing and service conditions. This is effective in letting the consumer use the furniture under the specified service conditions. Further, the product maker B is made to observe the processing conditions since it is possible to persuade the consumer C to buy the furniture after confirming that the furniture has been made by observing the processing conditions. The regeneration of the wooden material will be further promoted.

The collecting condition is informed to the consumer C and the material maker A in the foregoing embodiment (step S11). Alternatively, it may be informed only to the consumer C. In such a case, the collection fee will be computed after sending the guarantee code N1 of the furniture 6 and confirming the collection condition.

In the foregoing embodiment, the material maker A may register the processing information and service information in the server 1 in place of the product maker B and the consumer C. In other words, the material maker A may collect the used furniture 6 and determine an observance level of the guarantee condition of the furniture 6 on the basis of the processing information and service information stored by the server 1.

Further, the material maker A may guarantee the collection of wooden materials retrieved from a furniture waste in addition to the furniture 6 made of the wooden material 4. For instance, the guarantee conditions are attached to wooden materials used to build a house, so that wooden materials obtained from a broken house may be reliably collected in the future.

In the foregoing case, the guarantee conditions may be revised by adding housebreaking conditions and so on in accordance with life cycles of the house.

The material maker A, product maker B and consumer C may communicate with the server 1 by means other than the communication network 3. For instance, the material maker A may mail documents describing the recycle guarantee information to a body administrating or operating the server 1 in order to register it in the server 1. Alternatively, a document listing the guarantee code may be outputted by the server 1 and may be mailed to the material maker A or the product maker B.

The present invention is also applicable to any recyclable materials composing products. For instance, articles made of PET such as PET bottles, appliances made of glass or cullet such as bottles or medical tubes, and so on are recyclable, and are recycle-guaranteed.

The recycle guarantee conditions may be applied to a plurality of uses or applications of the material. In the foregoing description, the recycle guarantee conditions are applied to the material for making furniture. Alternatively, recycle guarantee conditions may be set for respective products (or use applications). Further, it is possible to collect wooden materials or products made in accordance with applied recycle guarantee conditions, without specifying the uses of the wooden materials.

The collecting conditions of products depending upon the service state thereof are not always limited to the discount of the collection fee. For instance, the collection fee may be increased, or collection of the product may be refused in accordance with the service state of the product.

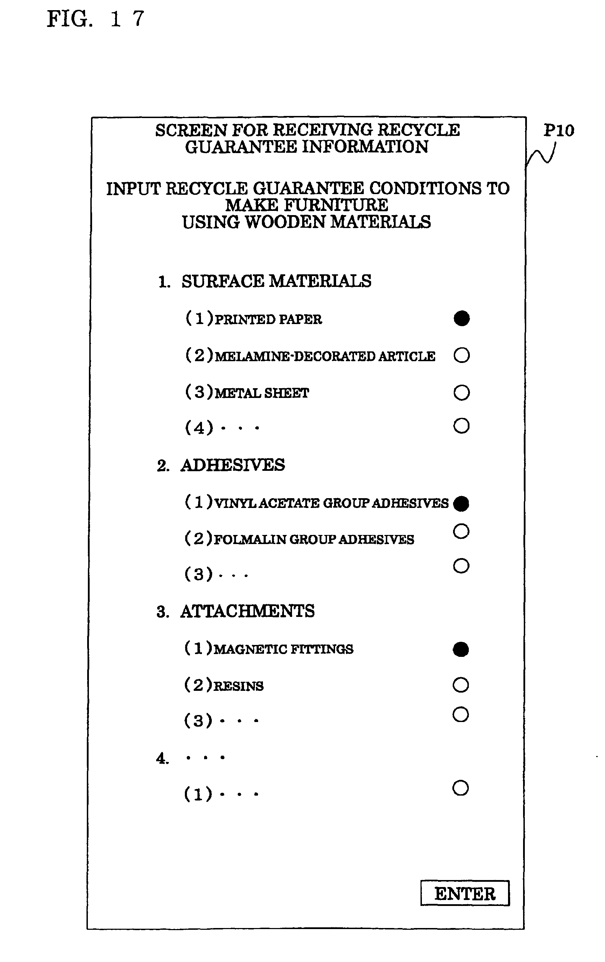

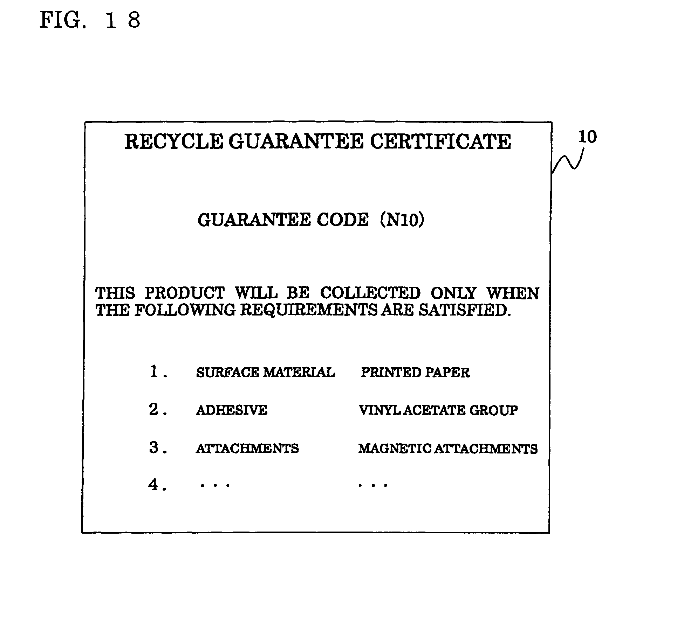

The following describe a recycle guarantee condition under which the collection of a waste is refused if the satisfaction level of the waste is not 100%. Refer to Figs. 17 and 18.

The material maker A receives a Web screen 10 (shown in Fig. 17) from the server 1 in order to register recycle guarantee information. The Web screen P10 is similar to the Web screen P1 of Fig. 3. Depending upon a material to be collected, the material maker A selects desired guarantee conditions out of guarantee categories such as surface treatment materials, adhesives, attachments and so on. The material maker A sends the selected items to the server 1. Referring to Fig. 17, the guarantee conditions represent that only the product including printed paper as a surface material will be collected. Further, the guarantee conditions are set irrespective of a processing condition and a service condition.

The Web screen P10 is not designed to receive the "criterion" and "collecting condition" which are shown on the Web screen P1. This is because the criterion prescribe that no products will be collected if they do not satisfy the recycle guarantee conditions and because the collecting condition has been predetermined. Needless to say, the criteria and collecting condition may be received from the material maker A besides the recycle guarantee conditions.

Fig. 18 shows an example of a recycle certificate 10 prepared in accordance with the recycle guarantee information shown in Fig. 17. The recycle guarantee certificate 10 is attached on the material or product, indicates that the product will be collected only when the guarantee conditions are satisfied, and lists the guarantee code, surface material, adhesive, and so on. Therefore, the product maker B who buys the material carrying the recycle certificate 10 or the consumer C who buys the product made of the material having the recycle certificate 10 can know that the material or the product will be reliably collected as waste in the future.

Alternatively, the recycle guarantee certificate 10 may describe only the guarantee code. The material maker A or consumer C may send the guarantee code to the server 1, thereby consulting a product maker, recycle guarantee condition and so on of the material carrying the recycle guarantee certificate 10.

A second embodiment of the invention will be described by specifying its differences from the first embodiment.

Although only one product maker is concerned in the foregoing embodiment, there are two product makers in the second embodiment.

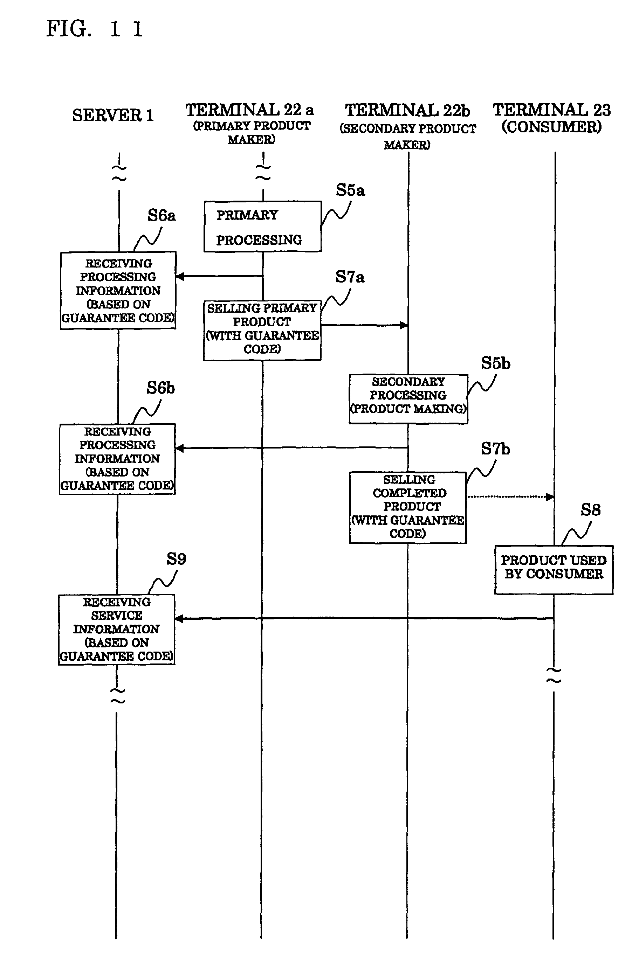

Fig. 11 shows a flow chart of the second embodiment, in which like reference numbers as those of Fig. 2 are used for like parts. In the second embodiment, the server 1 receives processing information both from first and second product makers (steps S6a and S6b), and judges a satisfaction level of a product on the basis of not only the processing information from the two product makers but also service information from a consumer.

Products made by two product makers can be recycle-guaranteed according to the second embodiment.

A third embodiment will be described hereinafter, mainly with respect to what differ from the forgoing embodiments.

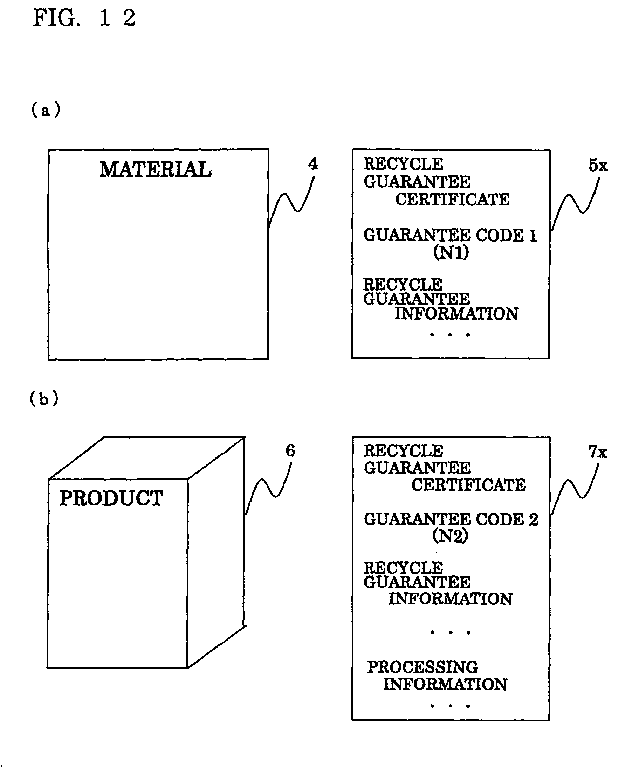

As shown in Figs. 6 and 8, the guarantee code N1 is assigned to the wooden material 4 and the furniture 6 in the foregoing embodiments. Referring to Fig. 12, two different guarantee codes N1 and N2 are assigned to the wooden material 4 and the furniture 6, respectively.

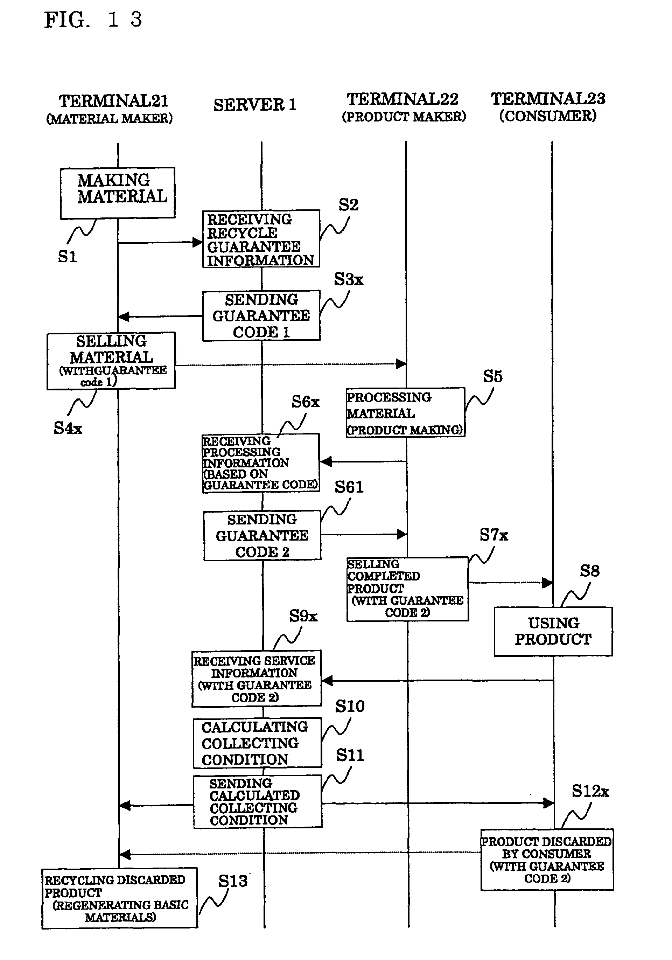

Refer to Fig. 13. Receiving recycle guarantee information from the terminal 21 of the material maker A (step S2), the server 1 outputs the guarantee code N1 to the material maker A (step S3x). Further, in response to the guarantee code N1 and processing information from the product maker B via the terminal 22 thereof (step S6x), the server 1 outputs to the product maker B a guarantee code N2 related to the guarantee code N1 (step S61). In short, the material maker A sells the wooden material 4 (having the guarantee code N1) to the product maker B (step S4x). The product maker B sells the furniture 6 (having the guarantee code N2) to the consumer C (step S7x). Finally, the consumer C discards the furniture 6 with the guarantee code N2 as a waste (step S12x).

The server 1 stores, in the guarantee information storage 12, both the recycle guarantee information from the terminal 21 and the guarantee code N1 of the wooden material 4 and the guarantee code N2 of the furniture 6. In other words, the server 1 stores the recycle guarantee information from terminal 21 and the guarantee code N1 related thereto. Then, the server 1 stores the processing information from the terminal 22 and the guarantee code N2 together with the existing recycle guarantee information and the guarantee code N1.

In the third embodiment, different guarantee codes may be prepared in each stage of the life cycle of the product in order to manage the product.

In place of the server 1, the product maker B may set out the guarantee code N2 and send it as well as the processing information to the server 1.

The following describe a fourth embodiment of the invention, mainly with respect to what differs from the first to third embodiments. The fourth embodiment relates to recycle guarantee of two or more materials constituting a product 6y.

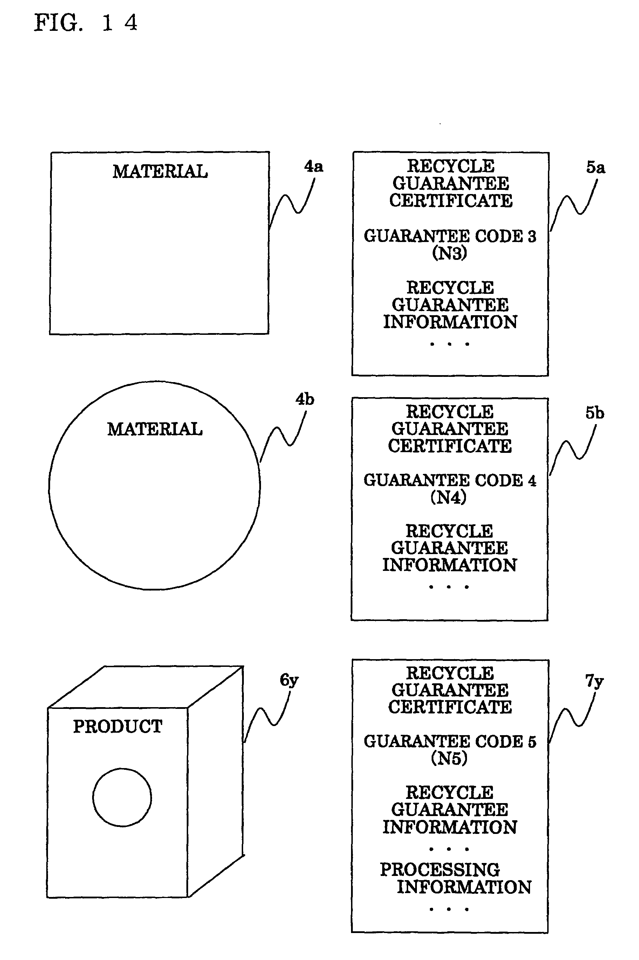

Referring to Fig. 14, the product 6y is made of materials 4a and 4b. Guarantee codesN3, N4 and N5 are assigned to the materials 4a and 4b, and to the product 6y, respectively.

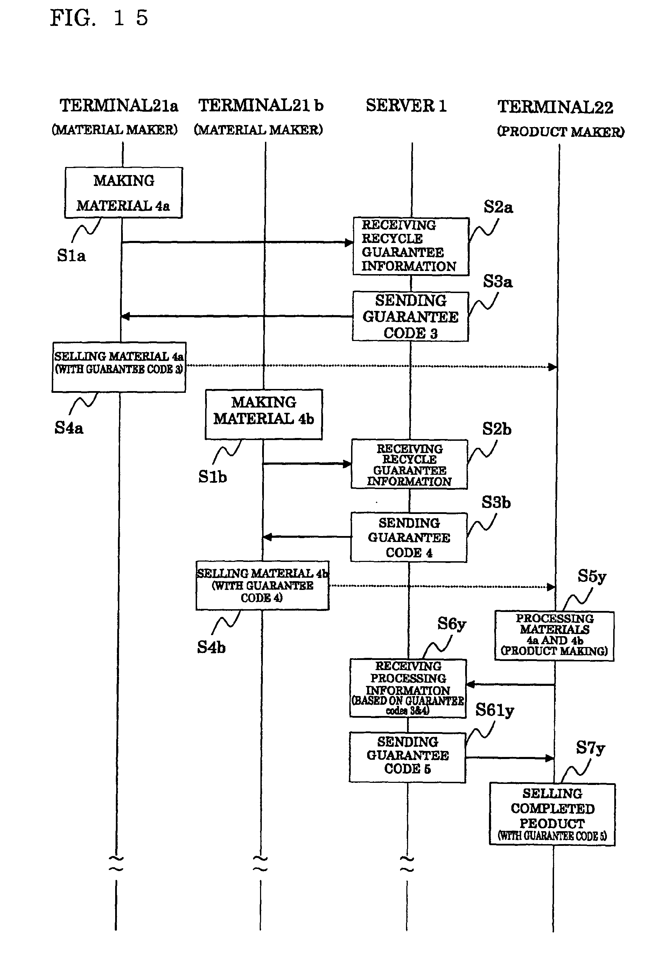

As shown in Fig. 15, the material makers making the materials 4a and 4b gain access to the server 1 via terminals 21a and 21b.

Receiving the recycle guarantee information for the material 4a (step S2a), the server 1 outputs the guarantee code N3 to the terminal 21a (step S3a). Further, the server 1 receives the recycle guarantee information for the material 4b (step Sa2b), and outputs the guarantee code N4 (step S3b).

The product maker B purchases the material 4a having the guarantee code N3 and the material 4b having the guarantee code N4 (steps S4a and S4b), and makes the product 6y (step S5y). In this state, the product maker B informs the server 1 of the processing information related to the guarantee codes N3 and N4 (step S61y).

Receiving the processing information from the product maker B, the server 1 outputs a guarantee code N5 related to the guarantee codes N3 and N4 (step S61y).

The product maker B attaches the guarantee code N5 to the product 6y, and sells it to a customer C (step S7y). The customer C will discard the product 6y having the guarantee code N5, in the future.

According to the fourth embodiment, it is possible to guarantee the recycling of products made of two or more materials.

In order to allow the product maker to make products using a plurality of materials and to guarantee recycling of the product, the server 1 may include a unit which assists selection of a probable combination of materials. For instance, when receiving a guarantee code of a particular material, the server 1 searches the guarantee information storage 12 on the basis of the guarantee code, retrieves the recycle guarantee conditions related to the particular material, and outputs information on a material which agrees with the retrieved conditions.

It is assumed here that the server 1 receives a guarantee code of a particle board from a product maker who makes furniture using the particle board. The server 1 sends the maker a list of surface treatment materials, adhesives and so on which satisfy the guarantee conditions for the particle board. This enables the product maker to select articles which are usable in combination with the particle board. In this case, it is preferable to check whether or not the particle board meets the recycle guarantee conditions for the surface material.

The invention will be further described with reference to a fifth embodiment. The following describe what are different in this embodiment from the foregoing embodiments.

In this embodiment, a product waste will be collected by a collector, i.e. not a material maker, who picks out basic materials from the collected product waste.

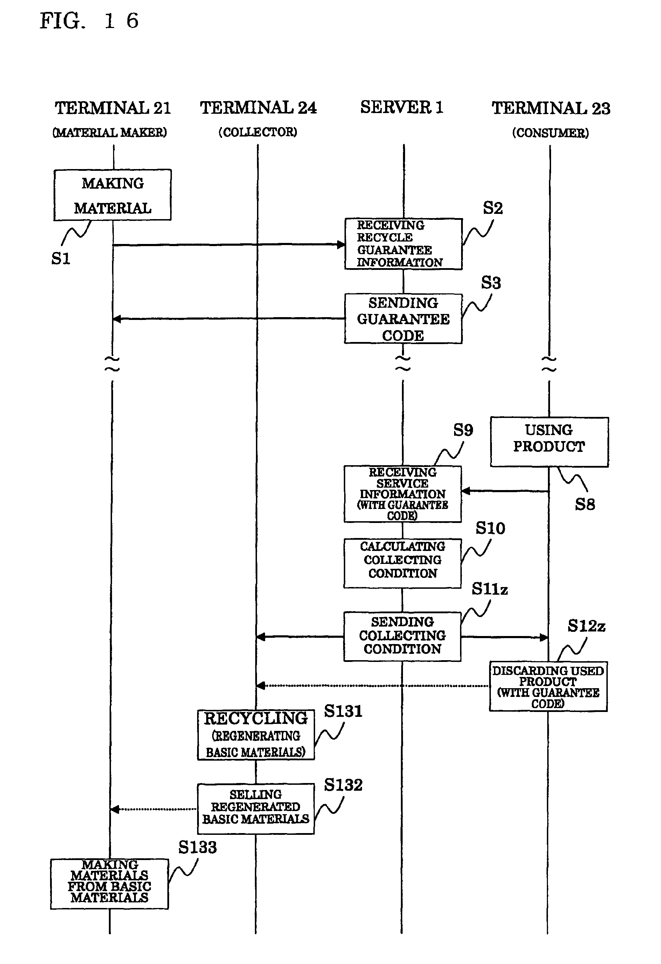

Referring to Fig. 16, the collector collects the product waste from the consumer C, and gains access to the server 1 via a terminal 24.

The server 1 transmits a calculated collecting condition to the consumer C and the collector (step S11z). The collector collects the product waste from the consumer C in accordance with the collecting condition (step S12z), picks out basic materials (step S131), and sells them to a material maker A (step S132). The material maker A makes a material from the regenerated basic material (step S133).

In this embodiment, the collector confirms the product to be discarded by the consumer C, and registers the processing information and service information in the server 1. Then, the server 1 computes a collecting condition. The collector may collect materials constituting the product in place of the product itself.

Alternatively, the product maker B who makes the product and sells it may collect the product from consumer C.

The collected product waste may be regenerated by the product maker B or by another party. It is assumed that furniture 6 made of wooden materials is collected in this case. The product maker B collects the furniture 6, breaks it down, picks out basic materials therefrom, generates wooden chips, and sells them to the material maker A. A different party may receive the furniture 6 collected by the product maker B, regenerate wooden chips, and sell them to the material maker A.

Used products or materials constituting the used products may be collected by a plurality of collectors. In such case, a plurality of collectors may be registered in the server 1 beforehand. A list of collectors may be informed to the consumer C who is going to discard the product.

A discount rate of the collection fee per unit weight depends upon the satisfaction level of the product, and may be registered for each collector in the server 1. The consumer C may select a desired collector using a Web screen, as shown in Fig. 10, where the recycle guarantee information is outputted. The Web screen lists names and contact addresses of collectors.

The products can be reliably recycle-guaranteed even when they are collected not by the material maker A but by the collectors who collect used products and extract basic ingredients therefrom.

The following describe a sixth embodiment of the invention. This embodiment differs the foregoing embodiments as described hereinafter.

The recycle guarantee certificates of the foregoing embodiments refer to the recycle guarantee conditions which should be satisfied in order to recycle used products. Therefore, it is possible to notify the product makers and customers that the product cannot be recycled when products are made or used against the recycle guarantee conditions stated on the recycle guarantee certificates. In such a case, neither the product maker nor customer can know whether wastes are incinerated (i.e. thermal emission) or buried.

In this embodiment, the recycle guarantee certificate specifies not only the recycle guarantee conditions for assuring recycling but also non-recycle-guarantee conditions under which non-recyclable products will be incinerated, buried and so on.

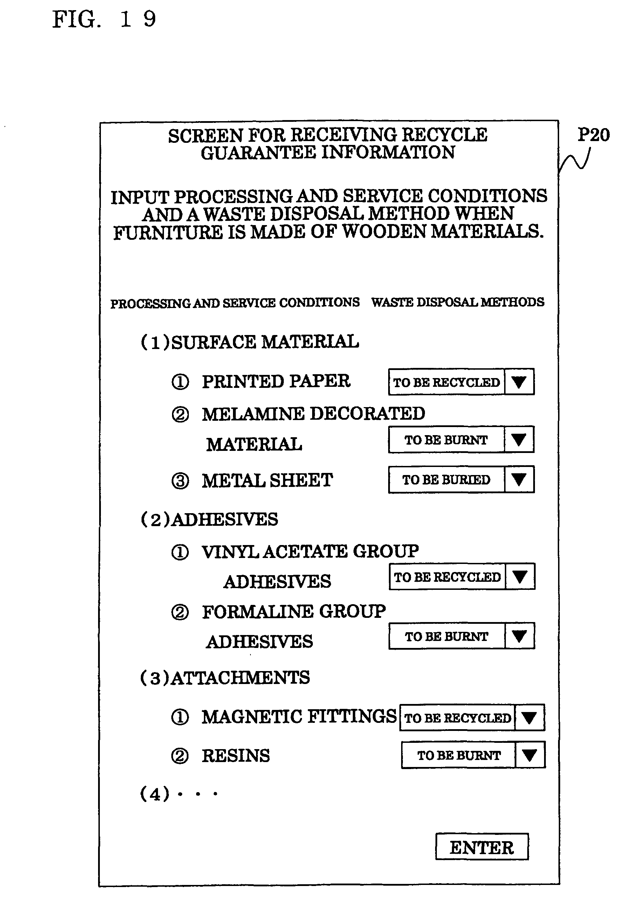

Fig. 19 shows an example of a Web screen P20 for the server 1 to receive the recycle guarantee information. The Web screen P20 corresponds to the Web screen P1 shown in Fig. 3, but lists not only processing and service conditions under which the recycle guarantee is applicable but also processing and service conditions under which the recycle guarantee is not applicable. Gaining access to the server 1, the material maker A receives the Web screen P20, specifies respective processing and service conditions using a pull-down menu, and sends them to the server 1.

Referring to Fig. 19, a printed sheet is recyclable while a melamine decorated article and a metal sheet are not recyclable. Both the melamine decorated article and metal sheet are to be incinerated or buried.

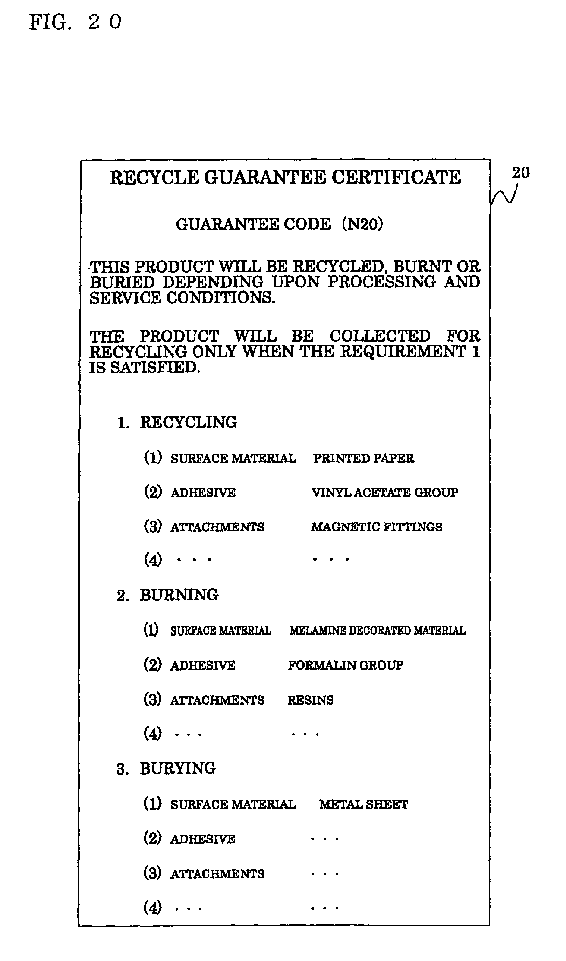

An example of a recycle guarantee certificate 20 is shown in Fig. 20. The recycle guarantee certificate 20 is prepared in accordance with the recycle guarantee information received as shown in Fig. 19, and covers the guarantee code, and waste disposal conditions for products depending upon respective waste disposal methods.

The recycle guarantee certificate 20 is effective in informing the product maker and consumer of the conditions for products to be recycled and the conditions of products which are not recyclable and have to be incinerated, buried and so on. Therefore, it is possible to let the product maker and consumer select processing and service conditions which are suitable to recycling compared to the incineration or burying in view of reduction of load applied to the environment.

The recycle guarantee certificate 20 describes that the product will be collected only when the recycle guarantee conditions are satisfied. Alternatively, the recycle guarantee certificate 20 may describe that products will be collected even if they do not always satisfy the recycle guarantee conditions. In such a case, collection fees may be raised compared with collection fees necessary for recycling. Further, collectors may be named for respective disposal methods.

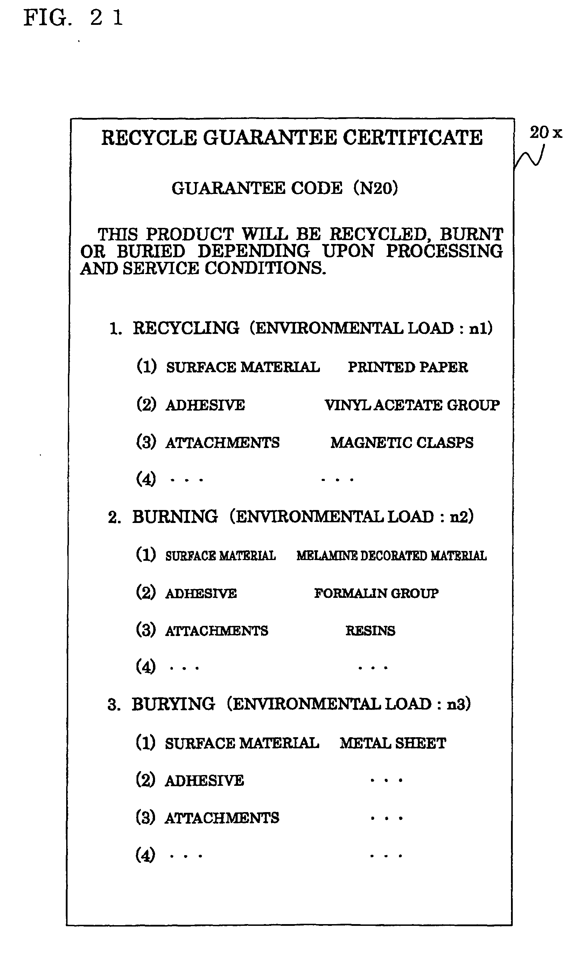

In Fig. 21, a recycle guarantee certificate 20x describes an environmental load for each waste disposal method. The term "environmental load" denotes used resources and energy applied to the environment during a life cycle of a product, and is represented by a value calculated in terms of an amount of discharged carbon dioxide. For instance, the product is assumed to be made of wooden materials. The wooden materials are obtained by cutting trees; cut trees are processed to make the product; it is used by a customer and is then discarded as a waste. The recycle guarantee certificate 20x indicates that the recycling has the environmental load n1, incineration has n2, and burying has n3. Either the material maker or the product maker may register the environmental loads in the server 1. Alternatively, the server 1 may gain access to another server, obtain information, such as an emission intensity, necessary for calculating the environmental loads.

The environmental loads on the recycle guarantee certificate 20x are effective in notifying the product makers and customers how processing and service conditions of the product affect the environment when the product is discarded as a waste.

As stated above, the recycle guarantee certificate may describe only the guarantee code. Either the product maker or the customer may transmit the recycle guarantee code to the server 1 in order to consult the information on the recycle certificate.

A seventh embodiment of the invention will be described mainly with respect to differences from the foregoing embodiments.

In the foregoing embodiments, the guarantee code is attached to the material and the product made of the material. For instance, the guarantee code N1 is used for the wooden material 4 and the furniture 6 as shown in Fig. 6 and Fig. 8. Referring to Fig. 12, the guarantee code N1 is assigned to the material 4 while the guarantee code N2 is assigned to the furniture 6.

In this embodiment, the guarantee code is assigned only to the product.

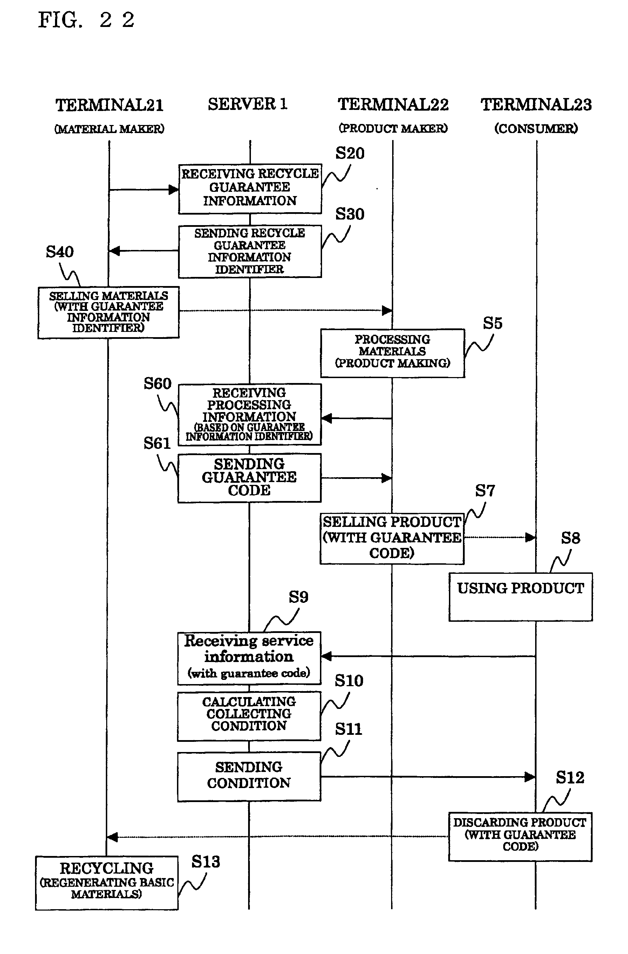

Refer to the flow chart in Fig. 22. The server 1 receives the recycle guarantee information via the guarantee information receiver 11, and outputs a recycle guarantee information identifier (step S30) in order to identify the received recycle guarantee information as shown in Fig. 5. The server 1 searches the guarantee information storage 12 and extracts the corresponding recycle guarantee information.

Alternatively, the material maker A may specify the recycle guarantee information identifier when registering the recycle guarantee information. Further, the server 1 may use a Web screen similar to the Web screen P2 for notifying the guarantee code as shown in Fig. 4, thereby notifying the recycle guarantee information identifier to the material maker A who registers the recycle guarantee information.

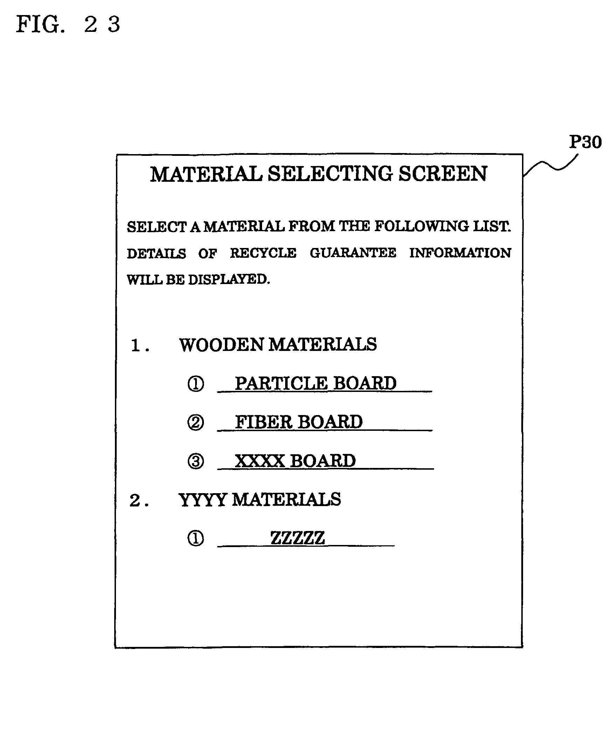

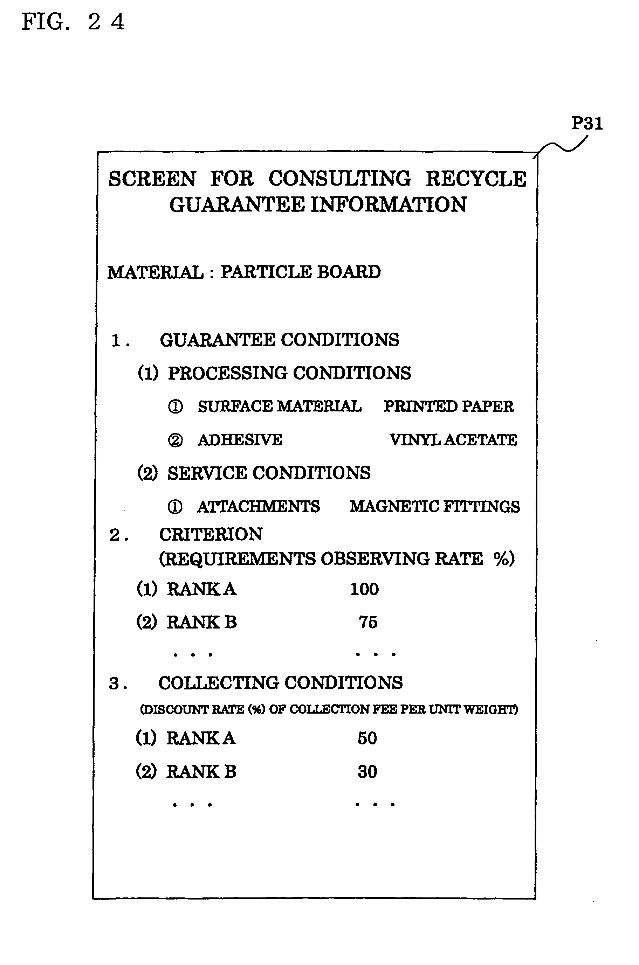

The material maker A sells the material (e.g. a particle board in this embodiment) to the product maker B (step S40). The product maker B confirms the recycle guarantee information of the particle board as follows. Refer to Fig. 23 and Fig. 24. The particle board has a recycle guarantee information identifier PB.

As requested by the product maker B, the server 1 prepares a material selecting Web screen P30 (shown in Fig. 23), and sends it to the terminal 22. The Web screen P30 shows a list of materials corresponding to the recycle guarantee information. When one of materials is specified, a recycle guarantee information identifier of the specified material is sent to the server 1.

The product maker B gains access to the server 1 via the terminal 22, receives the Web screen P30, and specifies the particle board on the Web screen P30. Receiving the recycle guarantee information identifier PB from the terminal 22, the server 1 searches the guarantee information storage 12, extracts the recycle guarantee information corresponding thereto, prepares a Web screen P31 for consulting the recycle guarantee information, and sends it to the terminal 22. The Web screen P 31 shows the recycle guarantee information for the particle board registered by the material maker A beforehand.

Now return to Fig. 22. The product maker B makes the furniture 6 using the particle board (step S5), and registers processing information in the server 1.

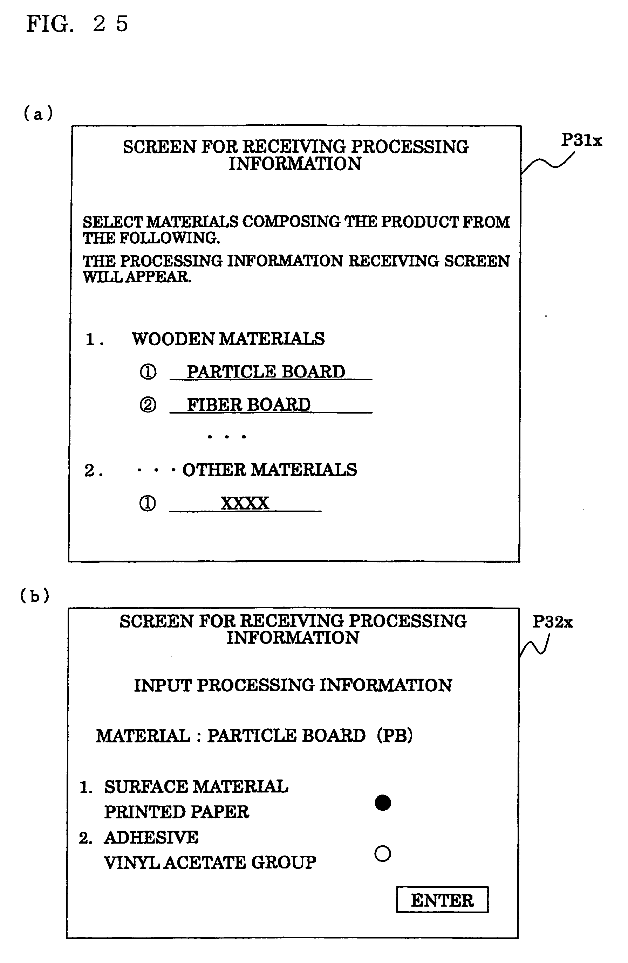

In response to the request via the terminal 22, the server 1 prepares a Web screen P31x in order to receive the processing information shown in Fig. 25, and sends the Web screen P31x to the terminal 22. The Web screen P31x shows a list of materials of which recycle guarantee information has been stored in the server 1. When the product maker B specifies one of materials, the guarantee information identifier of the specified material is sent to the server 1.

The product maker B specifies the particle board on the Web screen P31x. The server 1 receives the recycle guarantee information identifier PB from the terminal 22, searches the guarantee information storage 12, extracts the processing condition, prepares a Web screen P32x, and sends it to the terminal 22.

The server 1 receives the processing information, which has been selected by the product maker B using the Web screen P32x, via the processing information receiver 13 (step S60), and outputs a guarantee code (step S61). The guarantee code will be attached onto the furniture made by the product maker B.

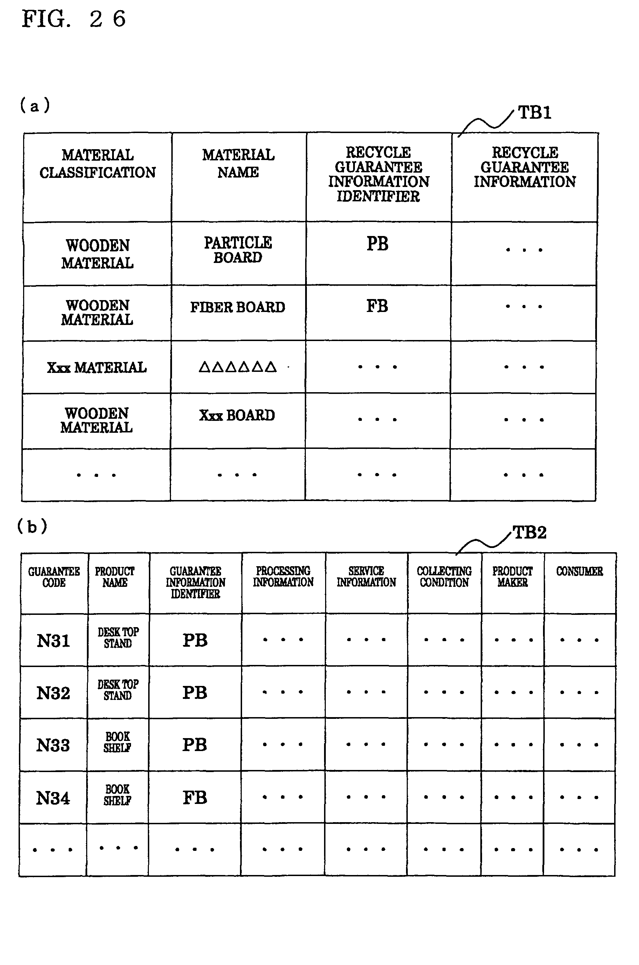

Referring to Fig. 26(a) and Fig. 26(b), the guarantee information storage 12 includes a table (database) TB1 and a table TB2. The table TB1 is used to manage the relationship between the recycle guarantee information and recycle guarantee information identifier of each material constituting the product. The table TB2 is for managing the relationship between the guarantee code of each product and the recycle guarantee information identifier of the material composing the product. As described previously, the server 1 receives the recycle guarantee information, issues the recycle guarantee information identifier, and stores it in the table TB1. The server 1 searches the table TB1 when issuing the Web screen P30 shown in Fig. 23. Further, receiving the processing information, the server 1 outputs the guarantee code and stores it in the table TB2. When receiving the processing information and service information as well as the guarantee code, the server 1 searches the table TB2, and stores the processing information and service information in a record of the guarantee code in question.

The table TB1 may store also classifications of materials, names of materials and information on the material maker (e.g. a contact address). The table TB2 may store also the collecting condition calculated by the server 1, and information of the product maker and customer.

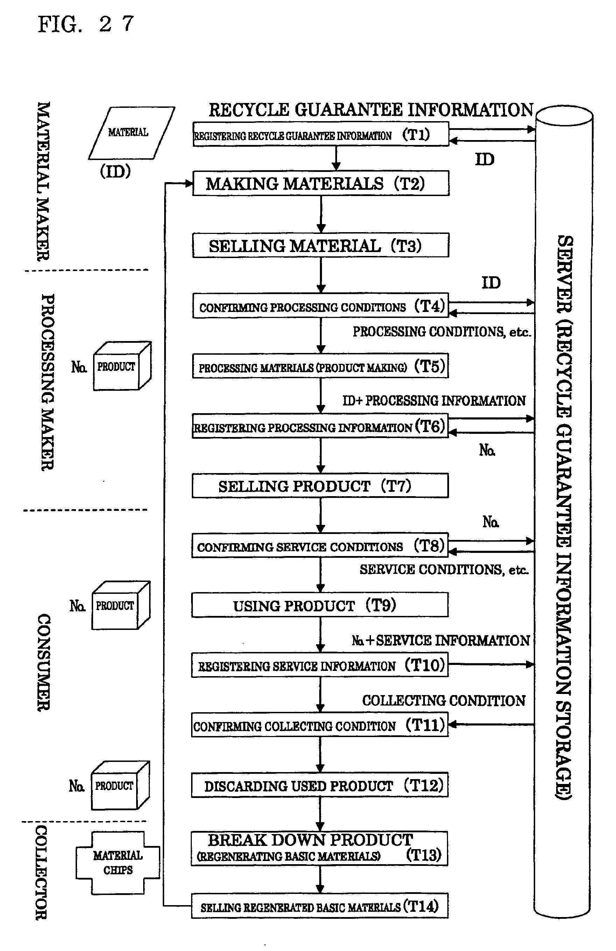

This embodiment is carried out as schematically shown in Fig. 27, in which "ID" denotes recycle guarantee information identifiers, and "No." denotes guarantee codes.

The material maker A registers the recycle guarantee information of the material (step T1), makes the material (step T2), and sells the material (T3). The server manages the recycle guarantee information on the basis of the guarantee information identifier.

When confirming processing conditions (step T4), or when registering processing information in the server 1 after processing the material (steps T5 and T6), the product maker sends the guarantee information identifier of the material to the server 1. The product maker attaches a guarantee code to the product, and sells it to a customer (step T7).

The customer sends the guarantee code of the product to the server when confirming service conditions (step T8), or when registering service information and confirming a guarantee contents (steps T9, T10 and T11).

The collector collects the product waste having the guarantee code, breaks it down, regenerates a basic material from the waste, and sells it to the material maker (steps T12, T13, and T14).

The material maker A produces a material from the regenerated basic material, and sells it to the product maker B (steps T2 and T3). In this state, it is not necessary to register the recycle guarantee information of the regenerated material since the guarantee code of the regenerated material has been already registered. The existing guarantee information identifier will be reused.

Once the recycle guarantee information is registered for the material, it is not necessary to re-register the recycle guarantee information each time the material is regenerated and sold. This is effective in alleviating the burden of repeatedly registering the recycle guarantee information.

In the foregoing embodiments of the invention, a recycle-guaranteed product is a product which has a guarantee code and is recycled without fail when it is discarded as a waste.

The recycle-guaranteed product is characterized as follows:
(1) The guarantee code is assigned in order to identify the recycle guarantee conditions which are necessary for recycling materials constituting the product;
(2) The guarantee code is used to retrieve the recycle guarantee conditions stored in the server;
(3) The recycle guarantee conditions in item (1) or (2) also include the processing conditions of materials and service conditions of the product;
(4) In any of the above three items, the guarantee code is attached on the product, and is used to identify the requirements necessary for regenerating materials of the product and to identify the collecting condition depending upon levels of the product's satisfying the recycle guarantee conditions.
(5) In item (4), the collecting condition depend upon levels of the product's satisfying the recycle guarantee conditions for the material.
(6) In item (4) or (5), the collecting condition relates to collection fee.
(7) In items (1) to (6), a plurality of materials may constitute the product.

The guarantee code on the recycle-guaranteed product is used to search recycle guarantee conditions stored in the server. This enables a probable buyer or user of the product to easily know the recycle guarantee conditions of the product by inputting the guarantee code in the server.

### INDUSTRIAL APPLICABILITY OF THE INVENTION

According to the invention, materials are sold after establishing recycle guarantee conditions for regeneration thereof. Regeneration of materials can be realized through the cooperation of parties concerned with the life cycle of products. Recycle guarantee information on the product enables the customer to recognize that the product has been made taking the recycling thereof into consideration, and select and buy the product.

When a collecting condition specifies probable fluctuations of collection fees of product wastes depending upon levels of the product's satisfying the recycle guarantee conditions, many customers will pay attention to and buy recycle-guaranteed products. Further, the customers may use the products in such a manner to satisfy the service state suitable to the regeneration of materials. Therefore, the regeneration of materials may be further promoted by parties concerned with the life cycle of the products.

## Claims

1. A recycle guarantee method carried out by a server, wherein the server performs the following:
receiving recycle guarantee conditions of a material constituting a product;
storing the received recycle guarantee conditions together with a guarantee code of the material and a guarantee code of a product made of the material;
receiving the guarantee code of the material from a product maker' terminal, extracting the stored recycle guarantee conditions on the basis of the received guarantee code, and transmitting the extracted recycle guarantee conditions to the product maker's terminal; and
receiving the guarantee code of the product from a consumer's terminal, extracting the recycle guarantee conditions on the basis of the received guarantee code, and transmitting the extracted recycle guarantee conditions to the consumer's terminal.

2. The method of claim 1, wherein the server transmits recycle guarantee conditions for respective waste disposal methods in place of the recycle guarantee conditions for the material.

3. The method of claim 2, wherein the server transmits information concerning environmental loads of the respective waste disposal methods.

4. The method of any one of claims 1 to 3, wherein the same guarantee code is assigned to the material and the product.

5. The method of any one of claims 1 to 3, wherein different guarantee codes are assigned to the material and the product.

6. The method of any one of claims 1 to 5, wherein the server issues the guarantee code of the material.

7. The method of any one of claims 1 to 5, wherein the guarantee code of the material is inputted from a material selling agent.

8. The method of claim 5, wherein the server issues the guarantee code of the product.

9. The method of claim 5, wherein the guarantee code of the product is inputted from the product maker's terminal.

10. The method of any one of claims 1 to 9, wherein the server further performs the following:
receiving information necessary for determining a satisfaction level of the product with respect to the recycle guarantee conditions for the material;
determining a satisfaction level of the product on the basis of the recycle guarantee conditions for the material and satisfaction level determining information of the product;
calculating a waste collecting condition of the product on the basis of the determined satisfaction level of the product; and
sending the calculated waste collecting condition to the consumer.

11. A recycle guarantee method carried out by a server, wherein the server performs the following:
receiving recycle guarantee conditions for a material constituting a product;
receiving information necessary for determining a satisfaction level of the product with respect to the recycle guarantee conditions for the material;
determining a satisfaction level of the product on the basis of the recycle guarantee conditions of the material and satisfaction level determining information of the product;
calculating a waste collecting condition on the basis of the satisfaction level of the product; and
sending the product waste collecting condition.

12. The method of claim 11, wherein a collecting condition of the material is applied in place of the collecting condition for the product.

13. The method of any one of claims 10 to 12, wherein the collecting condition for the product includes information concerning a waste collecting fee.

14. The method of any one of claims 10 to 13, wherein the collecting condition for the product includes information concerning a collector.

15. The method of any one of claims 10 to 14, wherein the server receives information concerning the satisfaction level of the product from a product maker's terminal and a consumer's terminal.

16. The method of any one of claims 10 to 15, wherein the satisfaction level determining information relates to a collection fee depending upon a state of the product discarded as a waste.

17. The method of any one claims 1 to 16, wherein the recycle guarantee conditions for the material are inputted in the server prior to the material making.

18. The method of any one claims 1 to 16, wherein the recycle guarantee conditions for the material are inputted in the server after the material making.

19. The method of any one of claims 1 to 18, wherein the recycle guarantee conditions for the material are established at respective stages in the life cycle of the product.

20. The method of claim 19, wherein the recycle guarantee conditions for the material include material processing conditions and service conditions of the product made of the material.

21. The method of claim 20, wherein the material recycling conditions include conditions for processing the material and for breaking down the product waste.

22. The method of any one of claims 1 to 21, wherein the product is furniture made of a wooden material.

23. The method of any one of claims 1 to 21, wherein the product is a bottle made of polyethylene terephthalate.

24. A recycle guarantee server comprising:
a receiver receiving recycle guarantee conditions for a material of a product;
a storage storing the received recycle guarantee conditions together with a guarantee code of the material and a guarantee code of the product, the guarantee codes being used to identify the recycle guarantee conditions;
a receiver receiving the guarantee code from a terminal of a product maker, extracting the recycle guarantee conditions on the basis of the guarantee code, and sending the recycle guarantee conditions to the terminal of the product maker; and
a unit receiving the guarantee code from a terminal of a consumer, extracting the recycle guarantee conditions on the basis of the guarantee code, and sending the material recycling conditions to the terminal of the consumer.

25. The recycle guarantee server of claim 24 further comprising:
a receiver receiving information for determining a satisfaction level of the product with respect to the recycle guarantee conditions;
a unit determining the satisfaction level of the product on the basis of the recycle guarantee conditions and the information for determining the satisfaction level;
a unit calculating a collecting condition of the product on the basis of the determined satisfaction level; and
a unit sending the collecting condition to a terminal of a consumer.

26. A recycle guarantee server comprising:
a receiver receiving recycle guarantee conditions for a product;
a receiver receiving information for determining a satisfaction level of the product with respect to the recycle guarantee conditions;
a unit determining the satisfaction level of the product on the basis of the recycle guarantee conditions and the information for determining the satisfaction level;
a unit calculating a collecting condition of the product on the basis of the determined satisfaction level; and
a unit sending the collecting condition.

27. A recycle guarantee program enabling a computer to function as the recycle guarantee server of any one of claims 24 to 26.

28. A medium having the recycle guarantee program of claim 27 recorded thereon.

29. A medium on which recycle guarantee information for recycling a used product is recorded, the material recycling information including conditions for regenerating a material of the product, a criterion for determining a satisfaction level of the product with respect to the material regenerating conditions, and a collecting condition of the product depending upon the satisfaction level of the product.

30. The medium of claim 29, wherein one of the three conditions of the recycle guarantee information is recorded.

31. A method of selling product with recycle guarantee information, wherein the recycle guarantee information refers to conditions for regenerating a material of the product, a criterion for determining a satisfaction level of the product with respect to the material regenerating conditions, and a collecting condition of the product depending upon the satisfaction level of the product.

32. The method of claim 31, wherein the recycle guarantee information is directly indicated on the material.

33. The method of claim 31, wherein the material recycling information is printed on paper and are attached on the material.

34. The method of claim 31, wherein the recycle guarantee information is recorded in a computer-readable medium and is attached on the material.

35. A recycling guarantee method carried out by a server, wherein the server performs the following:
receiving recycle guarantee conditions for a material constituting a product;
storing the received recycle guarantee conditions in correlation to a recycle guarantee information identifier for identifying the recycle guarantee conditions;
storing a guarantee code of a product made of the material in correlation to the recycle guarantee information identifier; and
receiving the guarantee code of the product, extracting the stored recycle guarantee conditions on the basis of the received guarantee code, and transmitting the extracted recycle guarantee conditions.

36. The method of claim 35, wherein the server issues the guarantee code for the product.

37. The method of claim 35, wherein the server receives the guarantee code of the product.

38. The method of any one of claims 35 to 37, wherein the server performs the following:
receiving information necessary for determining a satisfaction level of the product with respect to the recycle guarantee conditions;
determining the satisfaction level of the product on the basis of the recycle guarantee conditions and satisfaction level information of the product;
calculating a waste collecting condition on the basis of the satisfaction level of the product; and
sending the product waste collecting condition.

39. The method of any one of claims 35 to 38, wherein the collecting condition refers to information concerning a waste collecting fee.

40. The method of any one of claims 35 to 39, wherein the recycle guarantee conditions include material processing conditions and service conditions of the produce made of the material.

41. The method of any one of claims 35 to 40, wherein the product is furniture made of a wooden material.

42. The method of any one of claims 35 to 40, wherein the product is a bottle made of polyethylene terephthalate.

43. A recycle guarantee server comprising:
a receiver receiving recycle guarantee conditions for a material of a product;
a storage storing the received recycle guarantee conditions together with a recycle guarantee information identifier for identifying the recycling conditions;
a storage storing a guarantee code of the product in correlation to the recycle guarantee information identifier, and
a receiver receiving the guarantee code of the product, extracting the recycle guarantee conditions on the basis of the guarantee code, and sending the recycle guarantee conditions.

44. The method of claim 43, wherein the server includes a unit issuing the guarantee code for the product on the product.

45. The method of claim 43, wherein the server includes a receiver receiving the guarantee code.

46. The method of any one of claims 43 to 45, wherein the server further comprises:
a receiver receiving information necessary for determining a satisfaction level of the product with respect to the recycle guarantee conditions;
a unit determining the satisfaction level of the product on the basis of the recycle guarantee conditions and satisfaction level information of the product;
a unit calculating a waste collecting condition on the basis of the satisfaction level of the product; and
a unit sending the product waste collecting condition.

47. A recycle guarantee program enabling a computer to function as the server of any one of claims 43 to 46.

48. A recycle-guaranteed product whose recycling is guaranteed, and which has information for identifying recycle guarantee conditions.

49. A recycle-guaranteed product whose recycling is guaranteed, and which has data for identifying recycle guarantee conditions stored in a data processing device and searched on the basis of the data.

50. The product of claim 48 or 49, wherein the recycle guarantee conditions include material processing conditions and service conditions of the produce made of the material.

51. The product of any one claims 48 to 50, wherein the information indicated on the product is for identifying the recycle guarantee conditions and a collecting condition depending upon a satisfaction level of the product with respect to the recycle guarantee conditions.

52. The product of claim 51, wherein the waste collecting condition depends upon the satisfaction level of the product .

53. The product of claim 51 or 52, wherein the waste collecting condition denotes a collection fee.

54. The product of any one of claims 48 to 53 is made of a plurality of materials.

55. An account adapted to pay a collection fee of a product waste, wherein an amount of the collection fee is searched on the basis of information for identifying recycle guarantee conditions indicated on the product and stored in a data processing unit, and the data processing unit outputs the amount of the collection fee in response to the information for identifying the recycle guarantee conditions.

## Amended claims

### Amended claims under Art. 19.1 PCT

1. A recycle guarantee method carried out by a server, wherein the server performs the following:
receiving recycle guarantee conditions of a material constituting a product;
storing the received recycle guarantee conditions together with a guarantee code of the material and a guarantee code of a product made of the material;
receiving the guarantee code of the material from a product maker' terminal, extracting the stored recycle guarantee conditions on the basis of the received guarantee code, and transmitting the extracted recycle guarantee conditions to the product maker's terminal; and
receiving the guarantee code of the product from a consumer's terminal, extracting the recycle guarantee conditions on the basis of the received guarantee code, and transmitting the extracted recycle guarantee conditions to the consumer's terminal.

2. The method of claim 1, wherein the server transmits recycle guarantee conditions for respective waste disposal methods in place of the recycle guarantee conditions for the material.

3. The method of claim 2, wherein the server transmits information concerning environmental loads of the respective waste disposal methods.

4. The method of any one of claims 1 to 3, wherein the same guarantee code is assigned to the material and the product.

5. The method of any one of claims 1 to 3, wherein different guarantee codes are assigned to the material and the product.

6. The method of any one of claims 1 to 5, wherein the server issues the guarantee code of the material to be attached thereon.

7. The method of any one of claims 1 to 5, wherein the server receives the guarantee code of the material from a material selling agent's terminal.

8. The method of claim 5, wherein the server issues the guarantee code of the product to be attached thereon.

9. The method of claim 5, wherein the server receives the guarantee code of the product from the product maker's terminal.

10. The method of any one of claims 1 to 9, wherein the server further performs the following:
receiving information for determining a satisfaction level of the product with respect to the recycle guarantee conditions of the material;
determining the satisfaction level of the product on the basis of the recycle guarantee conditions and the received information;
calculating a waste collecting condition of the product on the basis of the determined satisfaction level of the product; and
sending the calculated waste collecting condition to the consumer's terminal.

11. A recycle guarantee method carried out by a server, wherein the server performs the following:
receiving recycle guarantee conditions of a material constituting a product;
receiving information for determining a satisfaction level of the product with respect to the recycle guarantee conditions of the material;
determining a satisfaction level of the product on the basis of the recycle guarantee conditions of the material and the received information;
calculating a waste collecting condition of the product on the basis of the satisfaction level of the product; and
outputting the product waste collecting condition.

12. The method of claim 11, wherein a collecting condition of the material is applied in place of the collecting condition for the product.

13. The method of any one of claims 10 to 12, wherein the collecting condition of the product includes information concerning a waste collecting fee.

14. The method of any one of claims 10 to 13, wherein the collecting condition of the product includes information concerning a collector.

15. The method of any one of claims 10 to 14, wherein the server receives information for determining the satisfaction level of the product from a product maker's terminal and a consumer's terminal.

16. The method of any one of claims 10 to 15, wherein the information for determining the satisfaction level of the product is determined depending upon a state of the product discarded as a waste.

17. The method of any one claims 1 to 16, wherein the recycle guarantee conditions of the material are inputted in the server prior to the material making.

18. The method of any one claims 1 to 16, wherein the recycle guarantee conditions of the material are inputted in the server after the material making.

19. The method of any one of claims 1 to 18, wherein the recycle guarantee conditions of the material are established at respective stages in the life cycle of the product.

20. The method of claim 19, wherein the recycle guarantee conditions of the material include material processing conditions and service conditions of the product made of the material.

21. The method of claim 20, wherein the recycle guarantee conditions of the material include conditions for breaking down the product waste.

22. The method of any one of claims 1 to 21, wherein the product is furniture made of a wooden material.

23. The method of any one of claims 1 to 21, wherein the product is a bottle made of polyethylene terephthalate.

24. A recycle guarantee server comprising:
a receiver receiving recycle guarantee conditions of a material constituting a product;
a storage storing the received recycle guarantee conditions together with a guarantee code of the material and a guarantee code of the product, the guarantee codes being used to identify the recycle guarantee conditions;
a receiver receiving the guarantee code from a terminal of a product maker, extracting the recycle guarantee conditions on the basis of the guarantee code, and sending the recycle guarantee conditions to the terminal of the product maker; and
a unit receiving the guarantee code from a terminal of a consumer, extracting the recycle guarantee conditions on the basis of the guarantee code, and sending the material recycling conditions to the terminal of the consumer.

25. The recycle guarantee server of claim 24 further comprising:
a receiver receiving information for determining a satisfaction level of the product with respect to the recycle guarantee conditions;
a unit determining the satisfaction level of the product on the basis of the recycle guarantee conditions and the received information;
a unit calculating a waste collecting condition of the product on the basis of the determined satisfaction level; and
a unit sending the collecting condition to a terminal of a consumer.

26. A recycle guarantee server comprising:
a receiver receiving recycle guarantee conditions of a material constituting a product;
a receiver receiving information for determining a satisfaction level of the product with respect to the recycle guarantee conditions;
a unit determining the satisfaction level of the product on the basis of the recycle guarantee conditions and the received information;
a unit calculating a waste collecting condition of the product on the basis of the determined satisfaction level; and
a unit outputting the collecting condition.

27. A recycle guarantee program enabling a computer to function as the recycle guarantee server of any one of claims 24 to 26.

28. A medium having the recycle guarantee program of claim 27 recorded thereon.

29. (Amended) A medium having recycle guarantee information recorded and attached on a recycle-guaranteed product, wherein the information is stored in a computer together with material recycling conditions, and is used for the computer to search the recycle guarantee conditions.

30. (Amended) The medium of claim 29 having the recycle guarantee conditions.

31. (Amended) A method of selling product materials carried out by a server, the server performing the following:
receiving recycle guarantee conditions of a material;
storing the received recycle guarantee conditions in correlation to information for identifying the recycle guarantee conditions;
receiving the information for identifying the material; and
searching the stored recycle guarantee conditions on the basis of the information for identifying the material.

32. (Amended) The method of claim 31, wherein the recycle guarantee information is directly indicated on the material.

33. (Amended) The method of claim 31, wherein the recycle guarantee information is printed on paper, which is attached on the material.

34. (Amended) The method of claim 31, wherein the recycle guarantee information is recorded in a computer-readable medium, which is attached on the material.

35. A recycle guarantee method carried out by a server, wherein the server performs the following:
receiving recycle guarantee conditions of a material constituting a product;
storing the received recycle guarantee conditions in correlation to a guarantee, information identifier for identifying the recycle guarantee conditions;
storing a guarantee code of a product made of the material in correlation to the guarantee information identifier; and
receiving the guarantee code of the product, extracting the stored recycle guarantee conditions on the basis of the received guarantee code, and outputting the extracted recycle guarantee conditions.

36. The method of claim 35, wherein the server issues the guarantee code.

37. The method of claim 35, wherein the server receives the guarantee code.

38. The method of any one of claims 35 to 37, wherein the server performs the following:
receiving information for determining a satisfaction level of the product with respect to the recycle guarantee conditions;
determining the satisfaction level of the product on the basis of the recycle guarantee conditions and the information;
calculating a waste collecting condition on the basis of the satisfaction level of the product; and
outputting the product waste collecting condition.

39. The method of any one of claims 35 to 38, wherein the collecting condition refers to information concerning a waste collecting fee.

40. The method of any one of claims 35 to 39, wherein the recycle guarantee conditions include material processing conditions and service conditions of the product made of the material.

41. The method of any one of claims 35 to 40, wherein the product is furniture made of a wooden material.

42. The method of any one of claims 35 to 40, wherein the product is a bottle made of polyethylene terephthalate.

43. A recycle guarantee server comprising:
a receiver receiving recycle guarantee conditions of a material constituting a products
a storage storing the received recycle guarantee conditions together with a recycle guarantee information identifier for identifying the recycle guarantee conditions;
a storage storing a guarantee code of the product in correlation to the recycle guarantee information identifier; and
a receiver receiving the guarantee code of the product, extracting the guarantee conditions on the basis of the guarantee code, and outputting the recycle guarantee conditions.

44. The server of claim 43 further comprises a unit issuing the guarantee code of the product.

45. The method of claim 43 further comprises a receiver receiving the guarantee code.

46. The server of any one of claims 43 to 45 further comprises:
a receiver receiving information for determining a satisfaction level of the product with respect to the recycle guarantee conditions;
a unit determining the satisfaction level of the product on the basis of the recycle guarantee conditions and the received information;
a unit calculating a waste collecting condition on the basis of the satisfaction level of the product; and
a unit outputting the calculated waste collecting condition.

47. A recycle guarantee program enabling a computer to function as the server of any one of claims 43 to 46.

48. A product whose recycling is guaranteed and which has information for identifying recycle guarantee conditions of a material constituting the product.

49. A product whose recycling is guaranteed and which has data for identifying recycle guarantee conditions of a material constituting the product stored in a computer, the recycle guarantee conditions being searched on the basis of the data.

50. The product of claim 48 or 49, wherein the recycle guarantee conditions include material processing conditions and service conditions of the product made of the material.

51. The product of any one claims 48 to 50, wherein the information indicated on the product is for identifying the recycle guarantee conditions and guarantee contents depending upon a satisfaction level of the product with respect to the recycle guarantee conditions.

52. The product of claim 51, wherein the guarantee contents depend upon the satisfaction level of the product .

53. The product of claim 51 or 52, wherein the guarantee contents denote a collection fee.

54. The product of any one of claims 48 to 53 is made of a plurality of materials.

55. (Amended) An account adapted to pay a collection fee of a product waste, wherein an amount of the collection fee is searched on the basis of information for identifying recycle guarantee conditions of a material constituting the product indicated on the product and stored in a data processing unit, and the data processing unit outputs the amount of the collection fee in response to the information.
